# EUROPÄISCHE PATENTSCHRIFT

(11) **EP 3 296 164 B1**
(45) Veröffentlichungstag und Bekanntmachung des Hinweises auf die Patenterteilung: **09.09.2020**
(21) Anmeldenummer: 17191969.9
(22) Anmeldetag: 19.09.2017
(51) Int. Cl.: B60R 25/021, B60R 25/023

(54) **GESICHERTE VORRICHTUNG ZUM SPERREN EINES FUNKTIONSWESENTLICHEN BAUTEILS EINES KRAFTFAHRZEUGS**
SECURED DEVICE FOR BLOCKING AN ESSENTIAL COMPONENT OF A MOTOR VEHICLE
DISPOSITIF SÉCURISÉ DE FERMETURE D'UN COMPOSANT ESSENTIELLEMENT FONCTIONNEL DU VÉHICULE AUTOMOBILE

(30) Priorität: 19.09.2016 DE 102016117641
(43) Veröffentlichungstag der Anmeldung: 21.03.2018
(73) Patentinhaber: HUF Hülsbeck & Fürst GmbH & Co. KG, 42551 Velbert (DE)
(72) Erfinder: Trischberger, Werner, 85229 Langenpettenbach/Markt Indersdorf (DE)
(74) Vertreter: Bals, Rüdiger

(56) Entgegenhaltungen:
- EP-A1- 2 090 478
- EP-A1- 2 993 090
- EP-A2- 1 182 104
- EP-A2- 2 420 416
- JP-A- 2004 314 965

## Beschreibung

Die Erfindung betrifft eine Sperrvorrichtung zum Sperren eines funktionswesentlichen Bauteils eines Kraftfahrzeugs, bspw. zur Sperrung einer Lenkspindel, nach dem Oberbegriff des Hauptanspruches.

Aus der Schrift EP 2 993 090 A1 ist eine Sperrvorrichtung mit einer Sicherungseinheit, die über ein steifes, drahtförmiges Halteelement verfügt, bekannt.

Aus der DE 10 2009 034 606 A1 ist beispielsweise eine Sperrvorrichtung zum Sperren einer Lenkspindel eines Kraftfahrzeuges bekannt. Die Sperrvorrichtung unterteilt sich in einen ersten Gehäuseteil und einen zweiten Gehäuseteil, die miteinander verbunden sind. Im ersten Gehäuseteil ist dabei ein Sperrbolzen beweglich aufgenommen, der entlang einer Hubachse zwischen einer Sperrstellung zur Sperrung der Lenkspindel und in einer Freigabestellung zur Freigabe der Lenkspindel verfahrbar ist. Im zweiten Gehäuseteil sind Mittel zur Bewegung des Sperrbolzens zwischen der Sperrstellung und der Freigabestellung aufgenommen, wie z. B. ein Schließzylinder. An der Stelle, wo das erste Gehäuseteil mit dem zweiten Gehäuseteil verbunden ist, bildet sich eine Trennebene. An der Trennebene können die Gehäuseteile durch eine unrechtmäßige Einwirkung, bspw. durch Auseinanderstoßen der Gehäuseteile an der Trennebene, ganz oder teilweise voneinander gelöst werden. Eine unberechtigte Person kann dadurch den Zugriff zum Sperrbolzen erlangen und den Sperrbolzen unberechtigterweise aus der Sperrstellung in die Freigabestellung überführen. Um dies zu vermeiden, ist eine Sicherungseinheit mit einem Arretierungselement in Gestalt eines Plättchens vorgesehen, welches zwischen einer Eingriffsstellung und einer Rückzugsstellung beweglich ist, um den Sperrbolzen zu arretieren bzw. freizugeben. Um das Arretierungselement im gewöhnlichen Betrieb der Sperrvorrichtung in der Rückzugsstellung dauerhaft zu halten, ist ein Halteelement in Form eines gebogenen Federdrahts vorgesehen. Ein Schenkel des Federdrahts ist im Normalzustand, wenn das zweite Gehäuseteil am ersten Gehäuseteil angeordnet ist, am Arretierungselement gehalten und ein anderer Schenkel ist zwischen den Gehäuseteilen eingeklemmt. Ändert sich die Lage oder die Anordnung des zweiten Gehäuseteils relativ zum ersten Gehäuseteil, so kann der Federdraht durch Rückfederung vom Arretierungselement losgelöst werden, sodass das Arretierungselement freigegeben wird und in den Sperrbolzen einrasten kann. Das Arretierungselement wird derart tief innerhalb des ersten Gehäuseteils angeordnet, dass es sogar durch Lösen der Gehäuseteile voneinander von außen nicht erreichbar ist. So kann bewirkt werden, dass trotz Veränderung der Anordnung des zweiten Gehäuseteils relativ zum ersten Gehäuseteil der Sperrbolzen in der Sperrstellung arretiert wird und nicht unberechtigterweise in die Freigabestellung überführt werden kann.

Dabei hat sich jedoch als Nachteil herausgestellt, dass es Arten der Manipulation an der Sperrvorrichtung gibt, bspw. durch Eindrücken oder Einschlagen am ersten Gehäuseteil, durch das sodass der Federdraht innerhalb einer Führung im Gehäuse eingeklemmt werden kann und die Eigenfederspannung im Federdraht nicht mehr ausreicht, um das Arretierungselement freizugeben. Das Arretierungselement wird dabei auf Abstand zum Sperrbolzen gehalten, wodurch die Funktion der Sicherungseinheit nicht mehr gewährleistet ist. In einem solchen Falle kann der Sperrbolzen nicht mehr arretiert werden. Eine unberechtigte Person kann dann trotz der Sicherungseinheit in der Sperrvorrichtung den Sperrbolzen aus der Sperrstellung in die Freigabestellung hochziehen.

Es ist daher die Aufgabe der vorliegenden Erfindung, eine Sperrvorrichtung der vorstehend genannten Art zumindest teilweise zu verbessern. Eine weitere Aufgabe der Erfindung ist es, eine sichere Sperrung des funktionswesentlichen Bauteils, trotz aller möglichen Arten der Manipulation an der Sperrvorrichtung, insbesondere trotz Eindrücken oder Einschlagen am ersten Gehäuseteil, in welchem der Sperrbolzen und das Arretierungselement aufgenommen sind, zu ermöglichen.

Diese Aufgabe wird ausgehend von einer Sperrvorrichtung gemäß dem Oberbegriff des Anspruches 1 in Verbindung mit den kennzeichnenden Merkmalen gelöst. Weitere vorteilhafte Weiterbildungen der Erfindung sind in den abhängigen Ansprüchen angegeben. Merkmale, die zu den einzelnen Ausführungsformen der erfindungsgemäßen Sperrvorrichtung offenbart werden, können in der Weise miteinander kombiniert werden, dass bezüglich der Offenbarung zu den Ausführungsformen der erfindungsgemäßen Sperrvorrichtung stets wechselseitig Bezug genommen wird bzw. werden kann.

Die Erfindung stellt eine Sperrvorrichtung bereit, die mit einem ersten Gehäuseteil, in dem ein Sperrbolzen beweglich zwischen einer Sperrstellung zur Sperrung des funktionswesentlichen Bauteils und einer Freigabestellung zur Freigabe des funktionswesentlichen Bauteils aufgenommen ist, und einem zweiten Gehäuseteil, in dem Mittel zur Bewegung des Sperrbolzens zwischen der Sperrstellung und der Freigabestellung aufgenommen sind, ausgeführt ist, wobei eine Sicherungseinheit am ersten Gehäuseteil vorgesehen ist, die in einer Eingriffsstellung eine Bewegung des Sperrbolzens verhindert, wenn das erste Gehäuseteil in seiner Anordnung zum zweiten Gehäuseteil verändert wird (d. h. bei einem Öffnungsversuch des Gehäuses bzw. in einem Einbruchsfall der Sperrvorrichtung), und in einer Rückzugsstellung eine Bewegung des Sperrbolzens freigibt, wenn das erste Gehäuseteil am zweiten Gehäuseteil angeordnet ist (d. h. beim geschlossenen Gehäuse bzw. in einem Normalbetrieb der Sperrvorrichtung). Hierzu ist erfindungsgemäß ein Auslöseelement vorgesehen, um bei Manipulationen des ersten Gehäuseteils und/oder des zweiten Gehäuseteils ein Überführen der Sicherungseinheit aus der Rückzugsstellung in die Eingriffsstellung zu unterstützen und/oder auszulösen.

Der Erfindungsgedanke liegt dabei darin, dass eine Sicherungseinheit mit einer primärer und einer sekundärer Auslösung versehen wird. Die primäre Auslösung der Sicherungseinheit wird erfindungsgemäß durch die eigene Federspannung eines Halteelementes bewirkt, welches funktionsgemäß im vorgespannten Zustand ein Arretierungselement auf Abstand zum Sperrbolzen hält oder durch Rückfederung freigibt, um den Sperrbolzen zu arretieren. Darüber hinaus wird erfindungsgemäß die sekundäre Auslösung, eine sog. Zwangsauslösung, durch das Auslöseelement bereitgestellt. Das Auslöseelement unterstützt das Halteelement beim Freigeben des Arretierungselementes und ggf. betätigt das Halteelement zum Freigeben des Arretierungselementes, sollte das Arretierungselement klemmen, indem das Auslöseelement das Halteelement weg vom Arretierungselement zieht. Das Auslöseelement kann dabei am zweiten Gehäuseteil angeordnet, bspw. eingeklemmt sein und beim Trennen des zweiten Gehäuseteils vom ersten Gehäuseteil mit dem zweiten Gehäuseteil bewegt werden. Durch Bewegen des zweiten Gehäuseteils relativ zum ersten Gehäuseteil wird somit auch das Auslöseelement mitbewegt. Das Halteelement kann dabei am Auslöseelement abgestützt werden und durch das Auslöseelement mitgenommen werden. Folglich kann sogar im Falle, wenn das Halteelement, bspw. durch Einschlagen auf das erste Gehäuseteil, eingeklemmt wird und die Eigenfederspannung für eine Rückfederung nicht mehr ausreicht, das Halteelement weg vom Arretierungselement bewegt werden, um dieses freizugeben. Das befreite Arretierungselement kann dann den Sperrbolzen arretieren und ein unbefugtes Herausziehen des Sperrbolzens aus der Sperrstellung in die Freigabestellung verhindern. Somit kann eine verbesserte Sperrvorrichtung bereitgestellt werden, die eine sichere Sperrung des funktionswesentlichen Bauteils, trotz unterschiedlicher Arten der Manipulation an der Sperrvorrichtung, insbesondere trotz Eindrücken oder Einschlagen am ersten Gehäuseteil, ermöglicht.

Bei der erwähnten Sperrvorrichtung kann es sich insbesondere um eine (mechanische) Lenkradverriegelungsvorrichtung handeln, die insbesondere rein mechanisch funktioniert. Dabei kann die Bewegung des Sperrbolzens durch einen Schließzylinder angetrieben bzw. verursacht werden. Auch kann es sich um eine elektromechanische Lenkradverriegelungsvorrichtung handeln, die insbesondere mit einem Antrieb funktioniert. Hierbei kann gerade der Sperrbolzens durch einen Antrieb, insbesondere einen (Elektro-)Motor angetrieben werden. Damit kann eine räumlich und bauliche Trennung zwischen einem mechanischen Schließzylinder und der eigentlichen (Lenkrad-)Verriegelungsvorrichtung erzielt werden.

Ferner ist es vorgesehen, dass die Sicherungseinheit ein Arretierungselement aufweist, welches in der Eingriffsstellung der Sicherungseinheit mit dem Sperrbolzen verrasten kann und in der Rückzugsstellung der Sicherungseinheit vom Sperrbolzen beabstandet sein kann. Dadurch kann eine einfache Arretierung des Sperrbolzens erreicht werden, wenn das erste Gehäuseteil in seiner Anordnung zum zweiten Gehäuseteil verändert wird. Die Änderung der Anordnung des ersten Gehäuseteils relativ zum zweiten Gehäuseteil kann z. B. durch ein Trennen oder durch eine Lageänderung des ersten Gehäuseteils vom oder relativ zum zweiten Gehäuseteil gebildet werden. Erfindungsgemäß kann das Arretierungselement in Richtung eines mechanischen Eingriffs mit dem Sperrbolzen zum Verrasten mit dem Sperrbolzen vorgespannt sein, um eine automatische Überführung der Sicherungseinheit aus der Rückzugsstellung in die Eingriffsstellung zu ermöglichen, sobald das erste Gehäuseteil in seiner Anordnung zum zweiten Gehäuseteil verändert wird. Hierzu kann das Arretierungselement in einer Führung im ersten Gehäuseteil, die sich im Wesentlichen quer zur einer Hubrichtung des Sperrbolzens erstrecken kann, aufgenommen und mittels einer Feder, bspw. einer komprimierten Druckfeder, in der Position vorgespannt sein, wenn das Halteelement am Arretierungselement eingreift. Diese Druckfeder kann dann beim Entspannen das Arretierungselement in Richtung zum Eingriff mit dem Sperrbolzen befördern, sobald das Halteelement das Arretierungselement freigegeben hat.

Zudem sieht die Erfindung vor, dass die Sicherungseinheit ein Halteelement aufweist, welches in der Rückzugsstellung der Sicherungseinheit das Arretierungselement beabstandet vom Sperrbolzen halten und in der Eingriffsstellung der Sicherungseinheit das Arretierungselement zu einem mechanischen Eingriff mit dem Sperrbolzen freigeben kann. Das Halteelement steht dabei unter einer federelastischen Vorspannung in einem mechanischen Eingriff mit dem Arretierungselement und hält das Arretierungselement dadurch auf Abstand zum Sperrbolzen. Die federelastische Vorspannung kann dadurch realisiert werden, dass das Halteelement im Normalbetrieb der Sperrvorrichtung, wenn das erste Gehäuseteil am zweiten Gehäuseteil angeordnet ist, derart zwischen dem ersten Gehäuseteil und dem zweiten Gehäuseteil eingeklemmt wird, dass im Falle einer Änderung der Anordnung zwischen dem ersten Gehäuseteil und dem zweiten Gehäuseteil das Halteelement eine Rückfederung erfahren kann. Diese Rückfederung kann folglich dafür sorgen, dass das Halteelement vom Arretierungselement gelöst und dieses zum Eingriff mit dem Sperrbolzen freigegeben werden kann. Dadurch kann der Vorteil erreicht werden, dass das Halteelement eine Änderung der Anordnung zwischen dem ersten Bauteil und dem zweiten Bauteil erfassen und die Sicherungseinheit unverzüglich auf die Änderung der Anordnung reagieren kann, um den Sperrbolzen zu arretieren.

Weiterhin ist es im Rahmen der Erfindung denkbar, dass das Auslöseelement aus einem Metall oder einer Metalllegierung ausgebildet, insbesondere aus einem Metallblech ausgeformt, ist. Somit kann ein kostengünstiges und einfaches Bauteil bereitgestellt werden, welches die Sperrvorrichtung auf eine vorteilhafte, erfindungsgemäße Weise verbessern kann. Ein Auslöseelement aus einem Metallblech lässt sich außerdem leicht formen, bspw. durch zuschneiden und/oder biegen, und kann einfach und ohne großen Montageaufwand am zweiten Gehäuseteil befestigt werden.

Des Weiteren kann die Erfindung bei einer Sperrvorrichtung vorsehen, dass das Auslöseelement derart am zweiten Gehäuseteil abgestützt, insbesondere befestigt, ist, dass das Auslöseelement mit dem zweiten Gehäuseteil bewegbar ist, wenn das erste Gehäuseteil in seiner Anordnung zum zweiten Gehäuseteil verändert wird (mit anderen Worten in einem Einbruchsfall, wenn das zweite Gehäuseteils unberechtigterweise vom ersten Gehäuseteil abgenommen wird, um das Gehäuse zu öffnen und den Zugang zum Sperrbozen zu kriegen). Das Auslöseelement kann dabei das Halteelement mitziehen, welches womöglich im ersten Gehäuseteil sich verhakt hat. Somit kann die sekundäre Auslösung der Sicherungseinheit durch das Auslöseelement neben oder unterstützend zur primären Auslösung durch die Rückfederung des Halteelementes auf eine einfache und zuverlässige Weise ermöglicht werden.

Zudem ist es denkbar, dass das Auslöseelement einen Stützabschnitt aufweist, der zum Abstützen des Auslöseelementes am zweiten Gehäuseteil dient. Bspw. kann der Stützabschnitt eine Kappe bilden, welche am zweiten Gehäuseteil abgestützt werden kann. Hierzu ist eine form- und/oder kraftschlüssige Verbindung, bspw. eine Rastverbindung oder eine Schraubverbindung denkbar. Wenn das zweite Gehäuseteil bewegt wird, kann der Stützabschnitt dafür sorgen, dass sich auch das Auslöseelement bewegt.

Außerdem ist es denkbar, dass das Auslöseelement mindestens einen, vorzugsweise zwei, Befestigungsabschnitte aufweist, die zum Befestigen des Auslöseelementes am zweiten Gehäuseteil dienen. Die Befestigungsabschnitte können sich winkelförmig vom Stützabschnitt erstrecken und ein zuverlässige, verlierfeste Befestigung des Auslöseelementes am zweiten Gehäuseteil ermöglichen. Mithilfe der Befestigungsabschnitte kann folglich der Vorteil erreicht werden, dass das Auslöseelement zuverlässig am zweiten Gehäuseteil gehalten werden kann, ungeachtet dessen in welche Richtung das zweite Gehäuseteil bewegt wird.

Ferner kann die Erfindung bei einer Sperrvorrichtung vorsehen, dass das Auslöseelement, insbesondere an einem Befestigungsabschnitt des Auslöseelementes, einen Mitnehmer aufweist, der auf die Sicherungseinheit einwirkt, wenn das erste Gehäuseteil in seiner Anordnung zum zweiten Gehäuseteil verändert wird, wobei insbesondere der Mitnehmer winkelförmig vom Auslöseelement, insbesondere von einem Befestigungsabschnitt des Auslöseelementes, absteht, wobei bevorzugt der Mitnehmer rippenartig und/oder vorsprungartig am Auslöseelement, insbesondere an einem Befestigungsabschnitt des Auslöseelementes, ausgebildet ist. Durch einen solchen Mitnehmer kann der Vorteil erreicht werden, dass ein Wirkeingriff zwischen dem Auslöseelement und dem Halteelement auf eine einfache Weise, bspw. durch Einhaken, geschaffen wird. Durch einen winkelförmigen Mitnehmer kann außerdem eine gezielte Einwirkung auf das Halteelement erzielt werden.

Ferner kann die Erfindung bei einer Sperrvorrichtung vorsehen, dass das Auslöseelement, insbesondere der Mitnehmer, gegenüber, anliegend an oder beabstandet zu, einer Biegestelle des Halteelementes angeordnet ist, wenn das erste Gehäuseteil am zweiten Gehäuseteil angeordnet ist (d. h. beim geschlossenen Gehäuse bzw. in einem Normalbetrieb der Sperrvorrichtung), und in die Biegestelle des Halteelementes hineingreift, wenn das erste Gehäuseteil in seiner Anordnung zum zweiten Gehäuseteil verändert wird. Somit kann eine Art Haken- und Ösen-Wirkverbindung zwischen dem Auslöseelement und dem Halteelement bewirkt werden, sodass bei einem Einbruchsversuch und einem versuchten Abnehmen des zweiten Gehäuseteils vom ersten Gehäuseteil das Auslöseelement am Halteelement zuverlässig eingreifen kann, um diesen mit sich zu ziehen.

Erfindungsgemäß ist weiterhin vorgesehen, dass das Halteelement als ein Federelement ausgebildet sein kann und eine federelastische Vorspannung aufweisen kann, wenn das erste Gehäuseteil am zweiten Gehäuseteil angeordnet ist (d. h. beim geschlossenen Gehäuse bzw. in einem Normalbetrieb der Sperrvorrichtung). Mit anderen Worten kann das Halteelement zwischen dem ersten Gehäuseteil und dem zweiten Gehäuseteil vorgespannt sein. Somit kann das Halteelement die vorhandene federelastische Vorspannung vorteilhafterweise aufbauen, wenn sich der erste Gehäuseteil am zweiten Gehäuseteil befindet, also dann, wenn das Federelement in der geordneten, eingebauten Lage angeordnet ist.

Ebenfalls kann es im Rahmen der Erfindung denkbar sein, dass die federelastische Vorspannung im Halteelement derart ausgebildet sein kann, dass das Halteelement durch Rückfederung vom Arretierungselement losgelöst werden kann, wenn das erste Gehäuseteil in seiner Anordnung zum zweiten Gehäuseteil verändert wird. Somit kann die Aktivierung der Rückzugsbewegung des Halteelementes einfach und zuverlässig gestaltet werden, um das Arretierungselement freizugeben, welches dann den Sperrbolzen gegen ein unberechtigtes Bewegen arretieren kann. Die federelastische Vorspannung im Halteelement kann die Rückfederung des Halteelementes dann ermöglichen, wenn das Federelement zwischen dem ersten und dem zweiten Gehäuseteil nicht mehr korrekt gehalten wird, etwa dann, wenn die Anordnung des ersten Gehäuseteils zum zweiten Gehäuseteil verändert wird. Die Rückfederung des Halteelementes kann dabei in der Richtung erfolgen, in der das Federelement das Arretierungselement freigibt. Folglich kann der Sperrbolzen im ersten Gehäuseteil in der Sperrstellung arretiert werden, sobald sich die Anordnung des zweiten Gehäuseteils relativ zum ersten Gehäuseteil verändert.

Des Weiteren hat sich als vorteilhaft herausgestellt, dass das Halteelement als ein Federdrahtelement ausgeführt sein kann, wobei das Federdrahtelement vorzugsweise wenigstens eine Biegestelle aufweisen kann, durch die das Federdrahtelement in einen ersten Schenkel und einen zweiten Schenkel unterteilt sein kann. Somit kann der Vorteil erreicht werden, dass das Halteelement einfach ausgebildet werden kann, nämlich einteilig und aus einem einfachen Draht. Durch die Biegestelle kann das Federdrahtelement in einen ersten und einen zweiten Schenkel unterteilt werden, so dass die federelastische Vorspannung zwischen dem ersten und dem zweiten Schenkel in das Halteelement eingebracht werden kann. Das Federdrahtelement kann somit eine Art Schenkelfeder bilden, um auf eine einfache Weise die federelastische Vorspannung im Halteelement aufzubauen.

Vorteilhafterweise kann das erste Gehäuseteil eine Bohrung aufweisen, in die zumindest der erste Schenkel des Halteelementes wenigstens teilweise beweglich geführt aufgenommen sein kann. Die Bohrung kann dabei den ersten Schenkel des Federdrahtelementes verschieblich aufnehmen und eine Rückfederachse bilden, um mit dem Arretierungselement in der Rückzugsstellung der Sicherungseinheit zusammenzuwirken und das Arretierungselement in der Eingriffsstellung der Sicherungseinheit freizugeben, damit dieses in den Sperrbolzen eingreifen kann. Das Halteelement kann bei einer Änderung der Lage des ersten Gehäuseteils relativ zum zweiten Gehäuseteil aus der Bohrung ein Stück weit herausspringen, um aus dem Eingriff mit dem Arretierungselement heraus zu gelangen. Folglich kann die Bohrung eine einfache Lagerung und eine zuverlässige Rückfederung des Haltelementes ermöglichen.

Ferner kann es im Rahmen der Erfindung vorgesehen sein, dass der zweite Schenkel des Halteelementes sich zwischen dem ersten Gehäuseteil und dem zweiten Gehäuseteil hinein erstrecken kann. Somit kann das Halteelement unmittelbar eine Änderung der Anordnung zwischen dem ersten Gehäuseteil und dem zweiten Gehäuseteil erfassen, um eine unverzügliche Auslösung der Sicherungseinheit zu gewährleisten, sobald die Anordnung gestört ist.

Im Rahmen der Erfindung können der erste Schenkel und der zweite Schenkel des Halteelementes einen Winkel zueinander einschließen, wobei der Winkel unter der federelastischen Vorspannung im Halteelement größer ist sein kann als bei der Rückfederung des Halteelementes. Somit kann die federelastische Vorspannung auf eine einfache Weise erzeugt werden und eine Rückstellkraft auf den zweiten Schenkel des Halteelementes ausüben, wenn das erste Gehäuseteil vom zweiten Gehäuseteil abgenommen wird oder umgekehrt.

Vorteilhafterweise kann zudem sein, wenn die federelastische Vorspannung durch ein Verspannen in das Halteelement eingebracht wird, indem das erste Gehäuseteil am zweiten Gehäuseteil angeordnet wird, und der zweite Schenkel zwischen dem ersten Gehäuseteil und dem zweiten Gehäuseteil unter Aufbringung der federelastischen Vorspannung eingeklemmt wird. Dabei können das erste Gehäuseteil und das zweite Gehäuseteil in einer Trennebene aneinander angrenzen, die eine nicht zwingend gleichförmige Teilungsfläche des ersten Gehäuseteils und des zweiten Gehäuseteils beschreiben kann. Der zweite Schenkel des Halteelementes kann sich in diese Trennebene zwischen dem ersten Gehäuseteil und dem zweiten Gehäuseteil hinein erstrecken. Der erste Schenkel des Federelementes, der in der Bohrung im ersten Gehäuseteil eingesetzt sein kann, kann etwa parallel zur Hubachse des Sperrbolzens verlaufen. Durch die Biegestelle im Halteelement kann der zweite Schenkel des Halteelementes parallel zur Trennebene ausgerichtet werden. Bei der Montage kann zunächst das Halteelement mit dem ersten Schenkel in die Bohrung eingeführt werden, wobei erst nachfolgend das zweite Gehäuseteil vollständig am ersten Gehäuseteil angeordnet werden kann. Bei dieser Anordnung kann die elastische Vorspannung in das Halteelement eingegeben werden, die im gewöhnlichen Betrieb der Sperrvorrichtung im Federelement aufrecht erhalten bleibt. Somit kann die Sicherungseinheit einfach montiert und zuverlässig betrieben werden.

Weiterhin kann die Erfindung vorsehen, dass ein Verstärkungselement am ersten Gehäuseteil und/oder am zweiten Gehäuseteil vorgesehen ist, um die Sicherungseinheit vor Manipulationen zu schützen. Durch das Verstärkungselement kann die Sicherungseinheit, insbesondere das Halteelement vor mechanischen Eingriffen, bspw. durch Zersägen und/oder Zerschneiden des ersten Gehäuseteils, geschützt werden. Das Verstärkungselement kann bspw. in Form eines Bolzens aus einem harten Metall ausgebildet sein, welches im ersten Gehäuseteil in Richtung nach außen vor dem Halteelement eingesetzt wird, sodass beim Eingriff von außen zuerst das Verstärkungselement durchgesägt bzw. durchtrennt werden müsste, bevor ein Element der Sicherungseinheit betroffen wird. Je nach baulichen Ausgestaltungen der Sperrvorrichtung kann ein oder mehrere Verstärkungselemente an den Stellen im ersten und/oder im zweiten Gehäuseteil der Sperrvorrichtung vorgesehen werden, die von außen zugänglich sein können und unter denen sich ein oder mehrere Elemente der Sicherungseinheit befinden können. Durch eine gezielte Positionierung eines oder mehrerer Verstärkungselemente kann außerdem der Vorteil erreicht werden, dass die Gehäuseteile an sich nicht unnötig beschwert werden müssen und sogar aus leichten und günstigen Materialien ausgeführt werden können.

Des Weiteren kann es im Rahmen der Erfindung vorgesehen sein, dass das Verstärkungselement als ein Bolzen oder ein Drahtelement, vorzugsweise aus einem, bspw. gehärteten, Kugellagerstahl oder aus einem Sinterstahl, ausgeführt sein kann. Ein Bolzen oder ein Drahtelement ist ein einfaches und stabiles Bauelement. Es kann massiv ausgeformt sein und eine im Wesentlichen zylindrische Form, vorzugsweise mit einem größeren Querschnitt als das Halteelement in Form eines Federdrahts, aufweisen. Ein solches Verstärkungselement aus einem, bspw. gehärteten, Kugellagerstahl oder aus einem Sinterstahl ist vorteilhaft, weil es nicht leicht zu verbiegen oder zu zerschneiden ist. Ein solches Verstärkungselement kann außerdem leicht an der Sperrvorrichtung montiert werden, bspw. in einer entsprechenden zylindrischen Aufnahme, bspw. in Form einer Bohrung, im ersten und/oder im zweiten Gehäuseteil. Das Verstärkungselement kann z. B. mittels einer Presspassung in der entsprechenden Aufnahme gehalten werden. Ein solches im Wesentlichen zylindrisches Verstärkungselement kann vorteilhafterweise vor jedes Element der Sicherungseinheit eingesetzt werden, wobei insbesondere das längliche Halteelement im Form eines dünneren Federdrahts somit zuverlässig geschützt werden kann. Das Verstärkungselement kann dabei zwischen der Gehäuseoberfläche und der Bohrung für den Federdraht, vorzugweise im Wesentlichen parallel zum Federdraht oder entlang des Federdrahts, eingesetzt werden, sodass beim Zerschneiden bzw. Zersägen des Gehäuses zunächst der massive Bolzen durchtrennt werden müsste, bevor der Federdraht beschädigt werden kann. Eine unberechtigte Person kann somit daran gehindert werden, die Funktionsweise der Sicherungseinheit zu stören. Sogar dann, wenn es der unberechtigten Person gelingt, die Gehäuseteile voneinander zu trennen, wird die Sicherungseinheit dennoch funktionsgemäß auslösen.

Weiterhin ist es im Rahmen der Erfindung möglich, dass das erste Gehäuseteil und/oder das zweite Gehäuseteil eine Aufnahme, bspw. in Form einer Bohrung, aufweisen können, in welcher das Verstärkungselement aufgenommen werden kann. Dadurch kann der Vorteil erreicht werden, dass das Verstärkungselement leicht im ersten und/oder im zweiten Gehäuseteil montiert werden kann. Hierzu müsste nach außen gesehen über den Stellen im ersten und/oder im zweiten Gehäuseteil, wo Elemente der Sicherungseinheit angeordnet sind und insbesondere das Halteelement sich erstreckt, eine Bohrung ausgebildet werden, die im Wesentlichen entlang des entsprechenden Elementes der Sicherungseinheit und insbesondere entlang des Halteelementes verläuft. Schließlich muss nur noch das Verstärkungselement in die Aufnahme geschoben werden, bspw. unter Presspassung, um die Elemente der Sicherungseinheit und insbesondere das Halteelement zu schützen.

Ferner ist es im Rahmen der Erfindung denkbar, dass das Verstärkungselement und/oder die Aufnahme derart ausgeformt sein können/kann, dass im eingebauten Zustand des Verstärkungselementes eine Presspassung zwischen dem Verstärkungselement und der Aufnahme entstehen kann. Hierbei kann die Aufnahme einen etwas kleineren Durchmesser aufweisen als das Verstärkungselement. Durch eine geeignete Wahl der Durchmesser kann beim Zusammenbau zwischen dem Verstärkungselement und der Aufnahme ein Übermaß entstehen, welcher dafür sorgen kann, dass das Verstärkungselement verlierfest in der Aufnahme befestigt wird. Somit kann auf eine einfache Weise eine sichere Befestigung des Verstärkungselementes am ersten Gehäuseteil und/oder am zweiten Gehäuseteil ermöglicht werden.

Zudem ist es im Rahmen der Erfindung denkbar, dass in der Aufnahme mindestens ein Befestigungsmittel vorgesehen sein kann, welches sich im eingebauten Zustand des Verstärkungselementes in der Aufnahme verformen kann. Das Befestigungsmittel kann dabei auf unterschiedliche Weise ausgeformt sein und in die Aufnahme hineinragen, sodass beim Einführen des Verstärkungselementes in die Aufnahme das Befestigungsmittel sich verformen kann. Somit kann eine Haftreibung zwischen dem Verstärkungselement und der Aufnahme erzeugt werden. Mit Hilfe des Befestigungsmittels kann somit auf eine einfache Weise eine kraftschlüssige Befestigung des Verstärkungselementes in der Aufnahme sichergestellt werden.

Ferner ist es im Rahmen der Erfindung denkbar, dass am Verstärkungselement mindestens ein Verbindungsmittel vorgesehen sein kann, welches sich im eingebauten Zustand des Verstärkungselementes in der Aufnahme verformen kann. Ähnlich zu einem Befestigungsmittel kann auch am Verstärkungselement ein Verbindungsmittel unterschiedlicher Formen ausgeformt werden. Beim Einführen des Verstärkungselementes in die Aufnahme kann sich das Verbindungsmittel an der Innenwand der Aufnahme abreiben und/oder verformen und somit einen Reibschluss zwischen dem Verstärkungselement und der Aufnahme erzeugen. Mit Hilfe des Verbindungsmittels kann somit auch eine kraftschlüssige Befestigung des Verstärkungselementes in der Aufnahme sichergestellt werden.

Weiterhin ist es im Rahmen der Erfindung denkbar, dass das Befestigungsmittel und/oder das Verbindungsmittel als eine Rippe, einer Rille, ein Zacken, ein Kragen und/oder ein Gewinde ausgebildet sein können/kann. Solche Elemente sind leicht herzustellen und können einfach am Verstärkungselement und/oder in der Aufnahme angeordnet, bspw. angeformt und angespritzt, werden. Eine Rippe kann dabei axial entlang des Verstärkungselementes an diesem und/oder oder in der Aufnahme ausgebildet sein, um für einen sicheren Sitz des Verstärkungselementes in einer radialen Richtung zu sorgen. Eine Rille kann einfach am Verstärkungselement und/oder in der Aufnahme ausgebildet werden, bspw. durch eine Kerbe in einer axialen Richtung. Bei einem Presssitz des Verstärkungselementes in der Aufnahme kann eine Materialverdrängung in die Rille erfolgen, wodurch eine Presspassung zwischen dem Verstärkungselement und der Aufnahme erzeugt werden kann. Ein Zacken kann in das Material des jeweiligen Elementes leicht eindringen und somit für einen sicheren Sitz des Verstärkungselementes in der Aufnahme sorgen. Ein Kragen bzw. ein Kranzelement am Verstärkungselement und/oder in der Aufnahme kann vorteilhafterweise leicht verformt werden und für eine Haftreibung zwischen dem Verstärkungselement und der Aufnahme sorgen. Ein Gewinde am Verstärkungselement und/oder in der Aufnahme kann sich vorteilhafterweise ins Material des jeweiligen Elementes beim Eindrehen des Verstärkungselementes in die Aufnahme einschneiden und für einen sicheren Sitz des Verstärkungselementes in einer axialen Richtung sorgen.

Des Weiteren ist es im Rahmen der Erfindung denkbar, dass das Verstärkungselement und/oder die Aufnahme eine, bspw. aufgeraute, Oberflächenstruktur aufweisen können/kann, die im eingebauten Zustand des Verstärkungselementes in der Aufnahme für eine Haftreibung zwischen dem Verstärkungselement und der Aufnahme sorgen können/kann. Dadurch kann auf eine einfache Weise eine zuverlässige Befestigung des Verstärkungselementes in die Aufnahme erfolgen.

Auch ist es im Rahmen der Erfindung denkbar, dass das Verstärkungselement im Querschnitt eine mehreckige Form aufweisen kann, die im eingebauten Zustand des Verstärkungselementes in der Aufnahme sich abrunden kann. Dabei ist es denkbar, dass an den Ecken des Verstärkungselementes ein Übermaß zum Durchmesser der Aufnahme entstehen kann. Beim Einschieben des Verstärkungselementes in die Aufnahme können sich diese Ecken zu einem Teil verformen und zu einem anderen Teil sich in die Aufnahme einschneiden. Dadurch kann auf eine einfache Weise eine Presspassung mit einem Kraftschluss kombiniert werden.

Zudem ist es im Rahmen der Erfindung denkbar, dass das Verstärkungselement in Form eines Bogens oder einer Spirale ausgebildet sein kann, die im eingebauten Zustand des Verstärkungselementes in der Aufnahme sich gerade biegen kann. In einem solchen Verstärkungselement kann sich eine gewisse Vorspannung aufbauen, wenn es in der Aufnahme gerade gebogen wird. Dadurch kann die Haftreibung zwischen dem Verstärkungselement und der Aufnahme erhöht werden.

Ferner ist es im Rahmen der Erfindung denkbar, dass eine Vielzahl an Verstärkungselementen am ersten Gehäuseteil und/oder am zweiten Gehäuseteil vorgesehen sein kann, um die Sicherungseinheit von unterschiedlichen Seiten oder um mehrere Sicherungseinheiten oder um mehrere Elemente der Sicherungseinheit vor Manipulationen zu schützen. Somit kann der Vorteil erreicht werden, dass alle Elemente einer Sicherungseinheit bzw. alle Sicherungseinheiten zuverlässig geschützt werden können. Dabei kann für jedes Element einer Sicherungseinheit bzw. für jede Sicherungseinheit ein individuelles Verstärkungselement vorgesehen sein, welches ein Durchdringen von außen zu dem Element durch Aufschneiden oder Zersägen des jeweiligen Gehäuseteils verhindert.

Gemäß einer weiteren möglichen Ausführungsform der Sperrvorrichtung kann am zweiten Gehäuseteil ein separierbares Bauelement angeordnet sein, wobei das separierbare Bauelement vorzugsweise ein elektrisches Schalterelement sein kann. Das erste und das zweite Gehäuseteil der Sperrvorrichtung können dabei einteilig ausgeführt sein, wobei das separierbare Bauteil zum zweiten Gehäuseteil zählen kann, sodass eine Änderung der Anordnung des zweiten Gehäuseteils zum ersten Gehäuseteil auch oder insbesondere durch eine Manipulation und/oder durch ein Entfernen des separierbaren Bauelementes vom zweiten Gehäuseteil hervorgerufen werden kann. Beispielsweise kann das elektrische Schalterelement gewaltsam vom zweiten Gehäuseteil getrennt werden, wobei dadurch der zweite Schenkel des Halteelementes aus der Trennebene herausspringen und der erste Schenkel aus der Bohrung herausfahren kann. Dabei kann sich der Winkel zwischen dem ersten und dem zweiten Schenkel verkleinern, wodurch die Vorspannung im Haltelement gelöst und eine Rückfederung des Halteelementes ermöglicht wird. Somit kann der erste Schenkel das Arretierungselement zum Arretieren des Sperrbolzens freigeben, der sicher in der Sperrstellung bezüglich der Lenkspindel verbleiben kann.

Zudem kann es im Rahmen der Erfindung vorgesehen sein, dass der Sperrbolzen beweglich entlang einer Hubachse im ersten Gehäuseteil aufgenommen sein kann. Somit kann der Sperrbolzen zwischen der Sperrstellung und der Freigabestellung linear und somit stabil geführt werden. Senkrecht dazu kann das Arretierelement auf den Sperrbolzen einwirken. Dabei kann die Bohrung für das Arretierelement ebenfalls linear ausgeführt werden. Mithin kann erreicht werden, dass die Überführung des Arretierelementes zum Eingriff mit dem Sperrbolzen stabil ausgeführt werden kann.

Ferner können die Mittel zur Bewegung des Sperrbolzens im zweiten Gehäuseteil einen Schließzylinder umfassen, in den ein Schlüssel zur Drehung des Schließzylinders einbringbar sein kann. Ein Schließzylinder kann für eine berechtigte Person mit einem passenden Schlüssel einfach bedient werden und über eine Drehung eine Bewegung auf den Sperrbolzen übertragen.

Weiterhin können die Mittel zur Bewegung des Sperrbolzens im zweiten Gehäuseteil ein Mitnehmerelement umfassen, das durch Drehung des Schließzylinders beweglich ist und das mit dem Sperrbolzen in Wirkverbindung steht, um den Sperrbolzen bei Drehung des Schließzylinders zwischen der Sperrstellung und der Freigabestellung entlang der Hubachse zu bewegen. Ein Mitnehmerelement kann vorteilhafterweise dafür sorgen, dass eine Drehbewegung des Schließzylinders in eine lineare Bewegung des Sperrbolzens umgewandelt werden kann.

Gemäß einer weiteren vorteilhaften Ausführungsform kann der Sperrbolzen wenigstens einen und vorzugsweise mehrere Sperrnuten aufweisen, in die das Arretierungselement in der Eingriffsstellung zur Sperrung des Sperrbolzens verrastet werden kann, um eine Bewegung des Sperrbolzens zu verhindern. Durch mindestens eine Sperrnut kann ein sicherer mechanischer Eingriff zwischen dem Arretierungsmittel und dem Sperrbolzen ermöglicht werden. Durch mehrere Sperrnuten im Sperrbolzen kann ermöglicht werden, dass das Arretierungselement den Sperrbolzen sowohl in der Sperrstellung als auch in der Freigabestellung arretieren kann. Bspw. kann sich der Sperrbolzen bei einem verschlossenen Fahrzeug in der Sperrstellung befinden. Wird gewaltsam die Anordnung des zweiten Gehäuseteils relativ zum ersten Gehäuseteil verändert, kann das Arretierungselement in eine solche Sperrnut eingreifen, die den Sperrbolzen in der Sperrstellung blockieren kann. Erfolgt hingegen eine Änderung der Anordnung des zweiten Gehäuseteils relativ zum ersten Gehäuseteil, wenn der Sperrbolzen in der Freigabestellung zur Freigabe der Lenkspindel gehalten ist, kann das Arretierungselement in eine solche Sperrnut eingreifen, die den Sperrbolzen in der Freigabestellung blockiert. Bspw. kann in einer Unfallsituation die Lage des ersten Gehäuseteils der Sperrvorrichtung relativ zum zweiten Gehäuseteil verändert werden, etwa indem ein Insasse oder ein weiteres Bauteil auf die Sperrvorrichtung einwirkt, und es muss gewährleistet sein, dass die Lenkspindel weiterhin frei beweglich ist. Folglich ist es vorteilhaft, dass der Sperrbolzen in der Freigabestellung blockiert wird, unabhängig wie im Crash-Fall des Fahrzeugs auf die Mittel zur Bewegung des Sperrbolzens im zweiten Gehäuseteil eingewirkt wird.

Unabhängig von der Situation der Einwirkung auf die Sperrvorrichtung, etwa durch einen Unfall oder durch eine Manipulation durch eine unberechtigte Person, kann die Änderung der Anordnung des ersten Gehäuseteils relativ zum zweiten Gehäuseteil durch ein Trennen oder durch eine Lageänderung des ersten Gehäuseteils vom oder relativ zum zweiten Gehäuseteil hervorgerufen werden. Umfassen beide Gehäuseteile eine gemeinsame Grundstruktur, indem sie bspw. einstückig miteinander ausgeführt sind, kann durch eine gewaltsame Einwirkung die Lage des ersten Gehäuseteils relativ zur Lage des zweiten Gehäuseteils bereits verändert werden. Bspw. ein Aufbrechen des Schließzylinders bewirkt ebenfalls eine Lageänderung des ersten Gehäuseteils relativ zum zweiten Gehäuseteil, wobei jede Lageänderung eine Entspannung der federelastischen Vorspannung im Halteelement bewirkt, und der erste Schenkel des Halteelementes gelangt aus der Aufnahme im ersten Gehäuseteil heraus, und gibt das Arretierungselement zum Eingriff in den Sperrbolzen frei.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht einer Sperrvorrichtung mit einem ersten Gehäuseteil und einem zweiten Gehäuseteil mit einem separierbaren Bauelement, wobei im ersten Gehäuseteil ein Sperrbolzen aufgenommen ist, der mit einer Lenkspindel eines Kraftfahrzeuges zusammenwirkt,
- Figur 2: eine Explosionsansicht der Sperrvorrichtung gemäß der Figur 1,
- Figur 3: eine Ansicht der Sperrvorrichtung gemäß den Figuren 1 und 2, wobei das erste Gehäuseteil und das zweite Gehäuseteil sowie das separierbare Bauelement des zweiten Gehäuseteils entnommen sind, und wobei sich der Sperrbolzen in einer Sperrstellung befindet und ein Arretierungselement durch ein Halteelement auf Abstand zum Sperrbolzen gehalten ist,
- Figur 4: die Sperrvorrichtung gemäß den Figuren 1 und 2, wobei ein Schlüssel in einen Schließzylinder eingeführt ist, und wobei sich der Sperrbolzen immer noch in der Sperrstellung befindet und das Arretierungselement durch das Halteelement auf Abstand zum Sperrbolzen gehalten ist,
- Figur 5: die Sperrvorrichtung gemäß den Figuren 1 und 2, wobei der Schlüssel im Schließzylinder gedreht ist, und wobei sich der Sperrbolzen in einer Freigabestellung befindet und das Arretierungselement durch das Halteelement auf Abstand zum Sperrbolzen gehalten ist,
- Figur 6: die Sperrvorrichtung gemäß den Figuren 1 und 2, wobei der Schlüssel im Schließzylinder zurück gedreht ist, der Sperrbolzen sich immer noch in der Freigabestellung befindet und das Arretierungselement durch das Halteelement auf Abstand zum Sperrbolzen gehalten ist,
- Figur 7: eine Ansicht der Sperrvorrichtung gemäß der Figur 3, wobei das erste Gehäuseteil am zweiten Gehäuseteil angeordnet ist, der Sperrbolzen sich in der Sperrstellung befindet und das Arretierungselement durch das Halteelement auf Abstand zum Sperrbolzen gehalten ist,
- Figur 8a: eine Ansicht der Sperrvorrichtung gemäß der Figur 7, wobei das erste Gehäuseteil vom zweiten Gehäuseteil abgenommen ist, und wobei sich der Sperrbolzen in der Sperrstellung befindet und das Arretierungselement durch das Halteelement freigegeben ist und im Eingriff mit dem Sperrbolzen steht,
- Figur 8b: eine schematische Ansicht des Halteelementes unter einer federelastischen Vorspannung gestrichelt dargestellt und in einem entspannten Zustand, und
- Figur 9: eine Schnittansicht durch das erste Gehäuseteil mit einer Aufnahme für ein Verstärkungselement und einer Bohrung für ein Halteelement.

In den nachfolgenden Figuren werden für die gleichen technischen Merkmale auch von unterschiedlichen Ausführungsbeispielen die identischen Bezugszeichen verwendet.

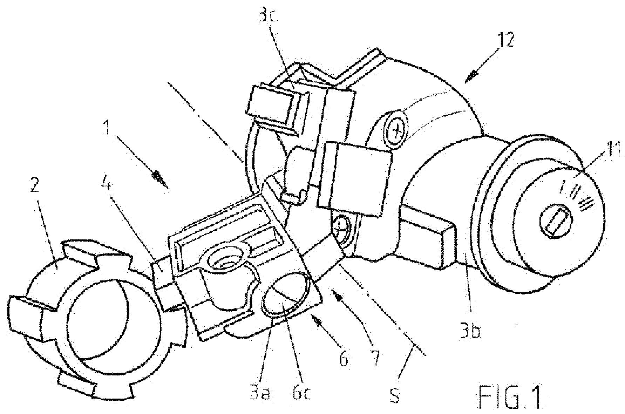

Die Figur 1 zeigt eine Sperrvorrichtung 1 zum Sperren eines funktionswesentlichen Bauteils 2 eines Kraftfahrzeuges, das als Lenkspindel 2 gezeigt ist. Das funktionswesentliche Bauteil 2 kann dabei jedes mechanische Bauteil betreffen, das zum Betrieb des Kraftfahrzeuges erforderlich ist. Es sind Sperrvorrichtungen 1 bekannt, die bspw. in ein Getriebeelement eingreifen, so dass etwa auch ein Getriebeelement ein funktionswesentliches Bauteil 2 bilden kann. Weiterhin ist ein Gangschalthebel als ein funktionswesentliches Bauteil 2 im Sinne der Erfindung denkbar.

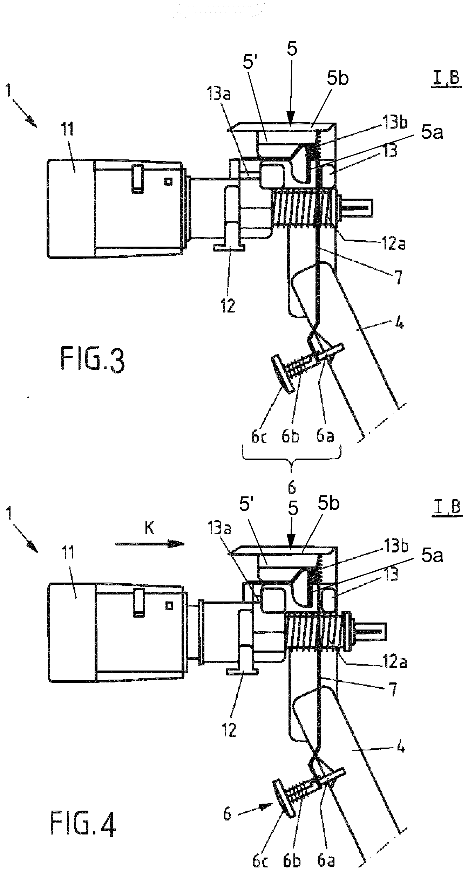

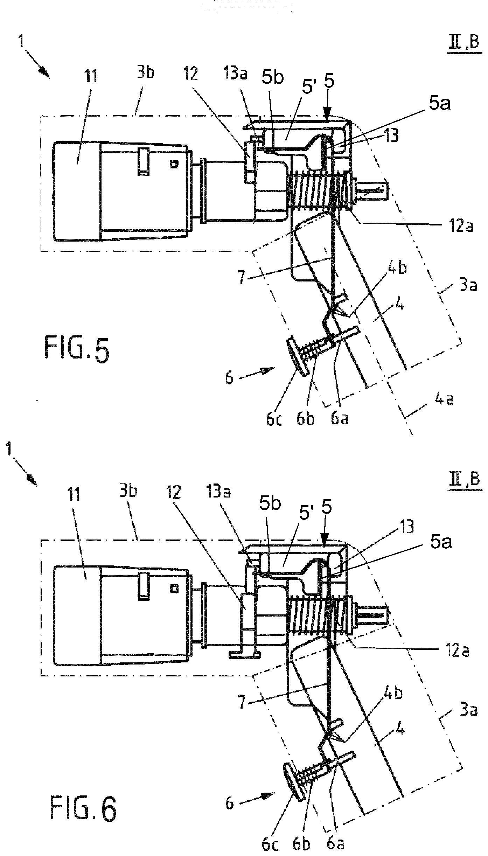

Die Sperrvorrichtung 1 weist zwei Gehäuseteile 3a, 3b auf, wobei ein erstes Gehäuseteil 3a gezeigt ist, das in seiner Längserstreckung einen Winkel zu der Längserstreckung eines zweiten Gehäuseteils 3b einschließt. Das zweite Gehäuseteil 3b umfasst ein separierbares Bauelement 3c in Form eines elektrischen Schalterelementes 3c, das an einer Trennebene T zwischen dem ersten Gehäuseteil 3a und dem zweiten Gehäuseteil 3b angrenzt. An der Trennebene T kann vorzugsweise eine Sollbruchstelle zwischen dem ersten Gehäuseteil 3a und dem zweiten Gehäuseteil 3b ausgebildet sein, um bei einem Einbruchsversuch ein Trennen der Gehäuseteile 3a, 3b an einer vorgegeben Stelle zu ermöglichen, die zuvor erprobt wurde, um einen Einbruchsschutz für ein Speerbolzen 4 zu ermöglichen. Im ersten Gehäuseteil 3a ist der Sperrbolzen 4 entlang einer Hubachse 4a zwischen einer Sperrstellung I (siehe die Figuren 3 und 4) zur Sperrung der Lenkspindel 2 und einer Freigabestellung II (siehe die Figuren 5 und 6) zur Freigabe der Lenkspindel 2 beweglich aufgenommen. Die Lenkspindel 2 weist einen Zahnkranz mit Nuten auf, in die der Sperrbolzen 4 eingreifen kann, um die Lenkspindel 2 zu sperren. Zur gewöhnlichen Bewegung des Sperrbolzens 4 entlang der Hubachse 4a dient ein Schließzylinder 11, der drehbeweglich und linear verschieblich gegen eine Federkraft einer Feder 12a im zweiten Gehäuseteil 3b aufgenommen ist.

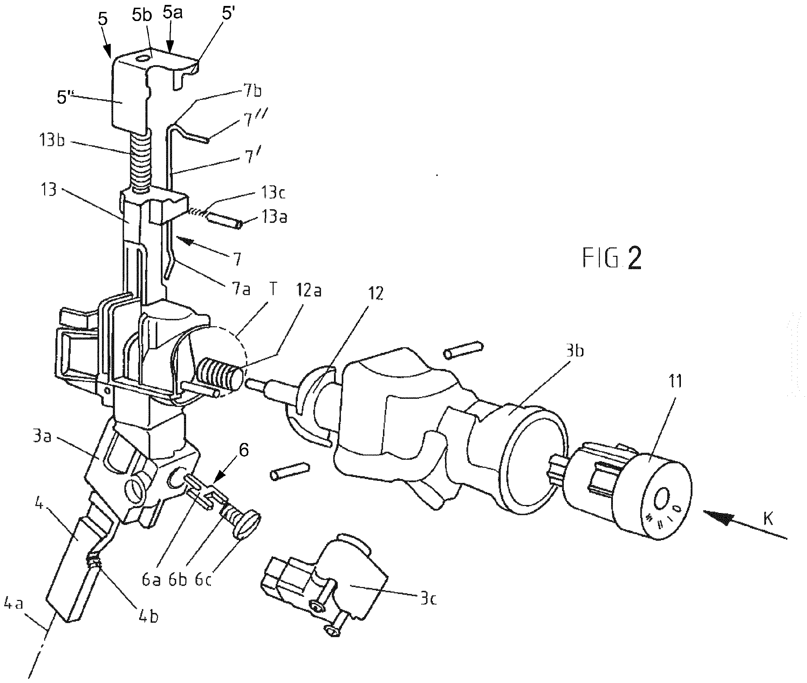

Die Figuren 3 bis 6 zeigen in einer Ansicht der Sperrvorrichtung 1 ohne das erste Gehäuseteil 3a und ohne das zweite Gehäuseteil 3b, wie der Sperrbolzen 4 durch Betätigen des Schließzylinders 11 zwischen der Sperrstellung I zur Sperrung der Lenkspindel 2 und der Freigabestellung II zur Freigabe der Lenkspindel 2 bewegt wird. Hierzu können weitere Mittel 11, 12, 13 vorgesehen sein, die ein Mitnehmerelement 12 und einen Schieber 13 umfassen können. Das Mitnehmerelement 12 ist dabei in Form einer Scheibe mit einer verdeckten Führungsnut für einen Stift 13a am Schieber 13 ausgebildet. In einer Explosionsansicht der Figur 2 sind im Nachfolgenden die Elemente der Sperrvorrichtung 1 im Einzelnen dargestellt. Im Bereich zwischen dem ersten Gehäuseteil 3a und dem zweiten Gehäuseteil 3b befindet sich ein erfindungsgemäßes Auslöseelement 5, welches im Folgenden im Detail beschrieben wird.

In der Figur 3 ist die Sperrvorrichtung 1 im Stillstand des Kraftfahrzeuges dargestellt, die die Lenksäule 2 sperrt. Dabei befindet sich der Sperrbolzen 4 in der Sperrstellung I und der Schließzylinder 11 steht in einer Ruheposition, bei der ein Schlüssel zum Betätigen des Schließzylinders 11 abgezogen ist.

In der Figur 4 ist ein nicht gezeigter Schlüssel in den Schließzylinder 11 in Richtung K eingesteckt. Dadurch wird das Mitnehmerelement 12 an den Stift 13a herangefahren und kann dann in die verdeckte Führungsnut am Mitnehmerelement 12 eingreifen. In dieser Position des Schließzylinders 11 befindet sich der Sperrbolzen 4 immer noch in der Sperrstellung I, der Schieber 13 ist aber bereit, um durch Drehen des Mitnehmerelementes 12 hochgeschoben zu werden, um den Sperrbolzen 4 in die Freigabestellung II hochzuschieben.

In der Figur 5 ist der Schließzylinder 11 von links nach rechts gedreht, wodurch der Stift 13a in der verdeckten Führungsnut am Mitnehmerelement 12 nach oben gewandert ist, bis der Stift 13a oberhalb der Scheibe am Mitnehmerelement 12 anliegt. In dieser Position des Schließzylinders 11 ist der Schieber 13 mit dem Sperrbolzen 4 nach oben hochgezogen. Der Sperrbolzen 4 befindet sich jetzt in der Freigabestellung II, in welcher das Kraftfahrzeug fahrbereit ist.

In der Figur 6 springt der Stift 13a oberhalb der Scheibe am Mitnehmerelement 12 heraus. Das passiert, weil der Stift 13a mit Hilfe einer Druckfeder 13c in diese Position vorgespannt ist, die in der Explosionsansicht der Figur 2 gezeigt ist. Der Stift 13a stütz sich oberhalb auf der Scheibe am Mitnehmerelement 12 ab und hält den Schieber 13 in der hochgezogenen Position zusammen mit dem Sperrbolzen 4 in der Freigabestellung II. Um wieder zurück in die Sperrstellung I zu gelangen, muss der nicht dargestellte Schlüssel wieder abgezogen werden, damit das Mitnehmerelement 12 vom Stift 13a Abstand nehmen kann. Danach kann der Schieber 13 mit Hilfe einer Federkraft einer Druckfeder 13b wieder nach unten bewegt werden. Die Druckfeder 13b kann dabei am Auslöseelement 5 abgestützt sein. Die Druckfeder 13c für den Stift 13a und die Druckfeder 13b für den Schieber 13 sind in der Explosionsdarstellung der Figur 2 gezeigt.

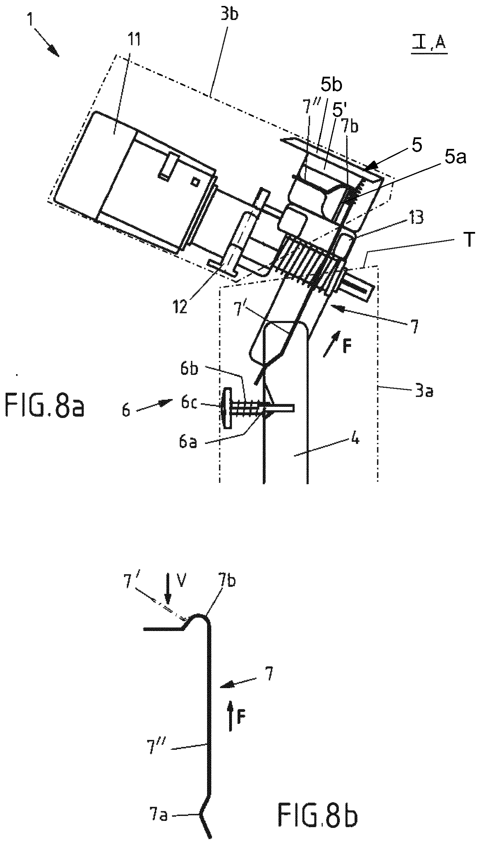

Um den Sperrbolzen 4 in der Sperrstellung I oder in der Freigabestellung II blockieren zu können, wenn auf die Sperrvorrichtung 1 unrechtmäßig eingewirkt wird, indem sich die Lage des ersten Gehäuseteils 3a relativ zur Lage des zweiten Gehäuseteils 3b ändert, ist eine Sicherungseinheit 6, 7 vorgesehen, die in der Figur 2 und in den Figuren 8a und 8b im Detail erklärt wird.

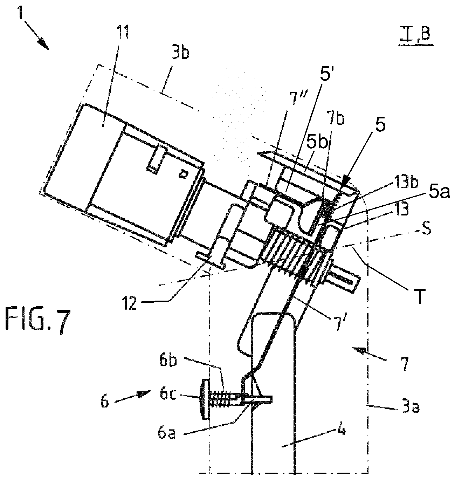

Die Sicherungseinheit 6, 7 weist ein Arretierungselement 6 mit einem Plättchen 6a auf, welches mit Hilfe einer Feder 6b in Richtung zum Eingriff mit dem Sperrbolzen 4 vorgespannt ist. Die Feder 6b stützt sich dabei an einem Befestigungsteil 6c ab. Das Arretierungselement 6 kann zum Eingriff mit dem Sperrbolzen 4, insbesondere mit einer der Sperrnuten 4b, gebracht werden, wie es in der Figur 8a gezeigt ist. Damit ist der Sperrbolzen 4 im ersten Gehäuseteil 3a festgesetzt und kann entlang der Hubachse 4a nicht mehr bewegt werden. In der Figur 7 ist das Arretierungselement 6 auf Abstand zum Sperrbolzen 4 gehalten. Um im gewöhnlichen Betrieb der Sperrvorrichtung 1 das Arretierungselement 6 in einer Rückzugsstellung B zu halten, ist ein Halteelement 7 vorgesehen, das als Federelement 7 in Gestalt eines Federdrahtelementes 7 ausgeführt ist. Die Elemente der Sicherungseinheit 6, 7 sind im Einzelnen in der Explosionsdarstellung der Figur 2 gezeigt.

Im zusammengebauten Zustand der Sperrvorrichtung 1 gemäß der Figur 7 greift das Halteelement 7 derart am Arretierungselement 6 ein, dass das Arretierungselement 6 trotz der Federbelastung durch die Druckfeder 6b nicht in eine der Sperrnuten 4b gelangen kann. Wird jedoch das Halteelement 7 in Richtung der Rückstellkraft F zurückgezogen, die in der Figur 8b gezeigt ist, so löst sich der Eingriff des Halteelementes 7 vom Arretierungselement 6, und das Arretierungselement 6 kann durch Eingriff in eine der Sperrnuten 4b den Sperrbolzen 4 gemäß der Figur 8a blockieren, so dass dieser nicht mehr entlang der Hubachse 4a beweglich ist. In der Figur 7a befindet sich die Sicherungseinheit 6, 7 in der Eingriffsstellung A.

Damit ist eine wirkungsvolle Rückhaltung des Arretierungselementes 6 ermöglicht, wobei lediglich ein einfaches Halteelement 7 in Gestalt eines Federdrahtelementes 7 Verwendung findet. Das Lösen des Federdrahtelementes 7 von dem Arretierungselement 6 erfolgt im Rahmen der Erfindung primär durch ein eigenelastisches Rückfedern des Halteelementes 7, wenn die Anordnung des ersten Gehäuseteils 3a relativ zum zweiten Gehäuseteil 3b verändert wird. Die Änderung der Anordnung umfasst dabei ausdrücklich auch ein Entfernen und/oder Manipulieren des elektrischen Schalterelementes 3c, durch das das Federelement 7 in die Aufnahme 10 im ersten Gehäuseteil 3a gehalten werden kann.

Die Figur 7 zeigt dabei die Sperrvorrichtung 1, bei der das erste Gehäuseteil 3a am zweiten Gehäuseteil 3b angeordnet ist. Das erste Gehäuseteil 3a und das zweite Gehäuseteil 3b grenzen in der Trennebene T aneinander, an welcher sich ein zweiter Schenkel 7" des Halteelementes 7 der Sicherungseinheit 6, 7 erstreckt. Dabei ist die Trennlinie T lediglich schematisch gezeigt, wobei die Trennlinie T mehr in das zweite Gehäuseteil 3b oder in das erste Gehäuseteil 3a versetzt sein kann.

Die Figur 8a zeigt dabei die Sperrvorrichtung 1, bei der das erste Gehäuseteil 3a in seiner Anordnung zum zweiten Gehäuseteil 3b verändert ist. Die Darstellung der Figur 8a zeigt weiterhin, dass das Halteelement 7 mit einer Biegestelle 7b in den freigesetzten Raum an der Trennebene T hineinspringt und dort hervorsteht. Dadurch wird ein erster Schenkel 7' des Halteelementes 7 nach oben in Richtung der Rückstellkraft F bewegt. Das Halteelement 7 löst sich folglich vom Plättchen 6a des Arretierungselementes 6 ab, welches dann in einer der Sperrnuten 4b am Sperrbolzen 4 eingreifen kann.

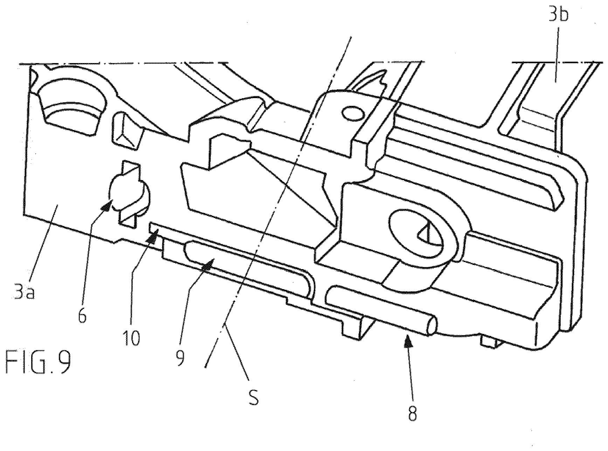

Wie in der Figur 7b gezeigt ist, dient die Biegestelle 7b dazu, das Halteelement 7 in den ersten Schenkel 7' und den zweiten Schenkel 7" zu unterteilen. Der erste Schenkel 7' kann dabei in einer Bohrung 10 im ersten Gehäuseteil 3a aufgenommen werden, die nachfolgend in der Figur 9 gezeigt ist. Folglich ist das Federelement 7 mit dem ersten Schenkel 7' beweglich in der Bohrung 10 im ersten Gehäuseteil 3a aufgenommen.

Wird die Lage des zweiten Gehäuseteils 3b relativ zum ersten Gehäuseteil 3a verändert, indem entweder mechanisch auf die Gehäuseteile 3a und 3b eingewirkt wird und die jeweilige Längserstreckung des ersten Gehäuseteils 3a relativ zum zweiten Gehäuseteil 3b verändert wird und/oder indem das elektrische Schalterelement 3c manipuliert oder entfernt wird, so kann der erste Schenkel 7' des Federelementes 7 aus der Bohrung 10 wenigstens ein Stück weit in Richtung der Rückfederung F des Halteelementes 7 heraus gelangen. Dies geschieht dadurch, dass der zweite Schenkel 7" des Halteelementes 7 gemäß der Figur 7 unter Vorspannung V an der Trennebene T zwischen dem ersten Gehäuseteil 3a und dem zweiten Gehäuseteil 3b eingeklemmt ist, und sich erst bei Veränderung der Anordnung des ersten Gehäuseteils 3a relativ zum zweiten Gehäuseteil 3b gemäß der Figur 7a entspannen kann. Auch durch ein bloßes Entfernen des elektrischen Schalterelementes 3c kann die Vorspannung im Halteelement 7 gelöst werden, wie dies beispielhaft in der Figur 7b gezeigt ist.

Die Figur 8b zeigt eine perspektivische Ansicht des Halteelementes 7, wobei eine erste Biegestelle 7a und eine zweite Biegestelle 7b gezeigt sind. Die erste Biegestelle 7a ermöglicht einen Eingriff am Arretierungselement 6. Die zweite Biegestelle 7b unterteilt das Federelement 7 in den ersten Schenkel 7' und in den zweiten Schenkel 7". Die beiden Schenkel 7' und 7" schließen einen Winkel α ein, der den Winkel zwischen den beiden Schenkeln 7' und 7" beschreibt, wenn das Federelement 7 vorgespannt ist (gestrichelt dargestellt). Ohne Vorspannung V schließt der zweite Schenkel 7" einen kleineren Winkel α' zum ersten Schenkel 7' ein. Wird das Federelement 7 vorgespannt, indem etwa das elektrische Schalterelement 3c zur Vervollständigung des zweiten Gehäuseteils 3b eingesetzt wird, so wird das Federelement 7 über die erste Biegestelle 7a in die Bohrung 10 im ersten Gehäuseteil 3a eingeschoben, und der Winkel zwischen den beiden Schenkeln 7' und 7" vergrößert sich, so dass sich der Winkel α als Winkel unter Vorspannung V zwischen den beiden Schenkeln 7' und 7" ergibt, der größer ist als der Winkel α' ohne Vorspannung V.

Es kann jedoch vorkommen, dass der erster Schenkel 7' des Halteelementes 7 sich im ersten Gehäuseteil 3a verklemmen kann. Diese kann unter anderen durch eine unberechtigte Person mittels Einschlagen bzw. Eindrücken auf das erste Gehäuseteil 3a bewirkt werden. Dann kann womöglich passieren, dass das Halteelement 7 aufgrund eigener federelastischen Vorspannung V nicht Rückfedern kann bzw. sich nicht aus dem ersten Gehäuseteil 3a befreien kann. Dann kann das Arretierelement 6 nicht freigegeben, sodass der Einbruchsschutz durch die Sicherungseinheit 6, 7 verhindert ist.

Hierzu ist erfindungsgemäß ein Auslöseelement 5 vorgesehen, um bei Manipulationen des ersten Gehäuseteils 3a und/oder des zweiten Gehäuseteils 3b, insbesondere bei Einschlagen bzw. Eindrücken auf das erste Gehäuseteil 3a, ein Überführen der Sicherungseinheit 6, 7 aus der Rückzugsstellung B in die Eingriffsstellung A zumindest zu unterstützen und/oder auszulösen.

Der Erfindungsgedanke liegt dabei darin, dass die Sicherungseinheit 6, 7 mithilfe des Auslöseelementes 5 mit einer primärer und einer sekundärer Auslösung versehen wird. Die primäre Auslösung der Sicherungseinheit 6, 7 wird erfindungsgemäß durch die eigene Vorspannung V des Halteelementes 7 bewirkt. Darüber hinaus wird erfindungsgemäß die sekundäre Auslösung, eine sog. Zwangsauslösung, durch das Auslöseelement 5 hilfsweise bereitgestellt, welches das Halteelement 7 beim Freigeben des Arretierungselementes 6 zumindest unterstützt und vorzugsweise das Halteelement 7 zum Freigeben des Arretierungselementes 6 betätigt, indem es das Halteelement 7 weg vom Arretierungselement 6 zieht. Das Auslöseelement 5 kann dabei am zweiten Gehäuseteil 3b abgestützt sein und beim Trennen des zweiten Gehäuseteils 3b vom ersten Gehäuseteil 3a mit dem zweiten Gehäuseteil 3b bewegt werden. Durch Bewegen des zweiten Gehäuseteils 3b relativ zum ersten Gehäuseteil 3a wird somit das Auslöseelement 5 und mit dem Auslöseelement 5 auch das Halteelement 7 mitbewegt. Folglich kann sogar im Falle, wenn das Halteelement 7 durch Einschlagen auf das erste Gehäuseteil 3a eingeklemmt wird und die eigene federelastische Vorspannung V für eine Rückfederung nicht mehr ausreicht, das Halteelement 7 weg vom Arretierungselement 6 bewegt werden, um dieses freizugeben. Das befreite Arretierungselement 6 kann dann den Sperrbolzen 4 arretieren und ein unbefugtes Herausziehen des Sperrbolzens 4 aus der Sperrstellung I in die Freigabestellung II verhindern.

Das Auslöseelement 5 kann aus einem steifen Metall oder einer Metalllegierung ausgebildet, bspw. aus einem Metallblech ausgeformt, sein.

Wie es die Figuren 2 bis 8a zeigen, kann das Auslöseelement 5 kappenartig ausgebildet sein und einen Stützabschnitt 5b aufweisen, der zum Abstützen des Auslöseelementes 5 am zweiten Gehäuseteil 3b dient. Der Stützabschnitt 5b kann in Form einer Platte ausgebildet sein, die das kappenförmige Auslöseelement 5 von oben begrenzt. Der Stützabschnitt 5b kann an einer Innenwandung im zweiten Gehäuseteil 3b zur Auflage kommen und dort bspw. gegen das zweite Gehäuseteil 3b verschraubt werden.

Wie es die Figuren 2 bis 8a weiterhin zeigen, kann das Auslöseelement 5 mindestens einen, vorzugsweise zwei, Befestigungsabschnitte 5', 5" aufweisen, die zum Befestigen des Auslöseelementes 5 am zweiten Gehäuseteil dienen können. Die Befestigungsabschnitte 5', 5" können sich winkelförmig vom Stützabschnitt 5b erstrecken und eine zuverlässige, verlierfeste Befestigung des Auslöseelementes 5 am zweiten Gehäuseteil 3b ermöglichen.

Wie es in der Figur 8a erkennbar ist, kann das Auslöseelement 5, insbesondere an mindestens einem Befestigungsabschnitt 5' des Auslöseelementes 5, einen Mitnehmer 5a aufweisen, der auf die Sicherungseinheit 6, 7, insbesondere auf das Halteelement 7 einwirken kann, wenn das erste Gehäuseteil 3a in seiner Anordnung zum zweiten Gehäuseteil 3b verändert wird.

Wie es die Figur 8a zeigt, kann der Mitnehmer 5a winkelförmig vom Auslöseelement 5, insbesondere von mindestens einem Befestigungsabschnitt 5' des Auslöseelementes 5, abstehen, um eine zuverlässige Einwirkung auf das Halteelement 7 zu bewirken. Weiterhin ist es denkbar, dass der Mitnehmer 5a rippenartig und/oder vorsprungartig am Auslöseelement 5, insbesondere an mindestens einem Befestigungsabschnitt 5' des Auslöseelementes 5, ausgebildet sein kann.

Der Mitnehmer 5a am Auslöseelement 5 kann gegenüber einer Biegestelle 7b des Halteelementes 7 angeordnet sein, wenn das erste Gehäuseteil 3a am zweiten Gehäuseteil 3b angeordnet ist, wie es die Figur 7 zeigt.

Wie es ferner die Figur 8a zeigt, kann der Mitnehmer 5a am Auslöseelement 5 in die Biegestelle 7b des Halteelementes 7 hineingreifen, wenn das erste Gehäuseteil 3a in seiner Anordnung zum zweiten Gehäuseteil 3b verändert wird. Somit kann das Auslöseelement 5 zuverlässig am Halteelement 7 eingreifen, um diesen mit sich zu ziehen und das Arretierungselement 6 freizugeben.

Die Figur 9 zeigt eine Schnittdarstellung durch das erste Gehäuseteil 3a, die durch eine Bohrung 10 für den ersten Schenkel 7' des Halteelementes 7 verläuft. An dieser Stelle ist der Abstand von außen zum Halteelement 7 relativ klein und kann leicht durch ein Zersägen des ersten Gehäuseteils 3a überwunden werden. Dadurch kann auch das dünne Federdrahtelement 7 zersägt werden. Das kann zur Folge haben, dass der erste Schenkel 7' des Halteelementes 7 durchtrennt wird und das abgetrennte Ende das Arretierungselement 6 trotz Änderung der Anordnung des ersten Gehäuseteils 3a zum zweiten Gehäuseteil 3b auf Abstand zum Sperrbolzen 4 hält. Dadurch kann die Sicherungseinheit 6, 7 leicht manipuliert und inaktiv gemacht werden.

Um diesem Problem zu begegnen, kann ein Verstärkungselement 8 in einer Aufnahme 9 vorgesehen sein, die im Wesentlichen parallel zur Bohrung 10 für das Halteelement 7 ausgerichtet sein kann und in Richtung nach außen vor der Bohrung 10 im ersten Gehäuseteil 3a liegen kann. Das Verstärkungselement 8 kann dabei in Form eines Bolzens 8, vorzugsweise aus einem gehärteten Kugellagerstahl, ausgebildet sein. Der Bolzen 8 kann einen größeren Durchmesser als das Halteelement 7 aufweisen. Der Bolzen 8 ist daher sehr stabil und kann nicht bzw. nicht so leicht durch Sägen, bspw. mit Hilfe einer Handsäge, durchtrennt werden. Das Verstärkungselement 8 kann mittels einer Presspassung in der Aufnahme 9 gehalten werden. Das Verstärkungselement 8 wird erfindungsgemäß von außen gesehen vor dem Halteelement 7 eingesetzt, damit eine unberechtigte Person mit einer Säge zuerst auf den Bolzen 8 trifft, bevor es das Halteelement 7 zersägen kann. Der Bolzen 8 erstreckt sich dabei im Wesentlichen entlang des gesamten zweiten Schenkels 7" des Halteelementes 7, also da, wo der zweite Schenkel 7" nahe unter der Oberfläche im ersten Gehäuseteil 3a verläuft und leicht zersägt werden kann. Somit müsste eine unberechtigte Person beim Zerschneiden bzw. Zersägen des ersten Gehäuses 3a, bspw. entlang der Schneidelinie S, zunächst den massiven Bolzen 8 durchtrennen, bevor das Haltelement 7 beschädigt werden kann. Eine unberechtigte Person kann somit mit Hilfe des Verstärkungselementes 8 wirkungsvoll daran gehindert werden, die Funktionsweise der Sicherungseinheit 6, 7 zu beeinträchtigen. Sogar dann, wenn es der unberechtigten Person gelingt, die Gehäuseteile 3a, 3b voneinander zu trennen, wie es in der Figur 8a gezeigt ist, wird die Sicherungseinheit 6, 7 funktionsgemäß auslösen.

Im ersten Gehäuseteil 3a ist also die Aufnahme 9 für das Verstärkungselement 8 vorgesehen. Grundsätzlich ist es denkbar, dass die Aufnahme 9 hindurch zu zweiten Gehäuseteil 3b sich erstrecken kann. Denkbar ist außerdem, dass das längliche und federelastische Halteelement 7 entlang seiner Länge geschützt werden. Ferner können ein oder mehrere Verstärkungselemente 8 im ersten Gehäuseteil 3a und/oder im zweiten Gehäuseteil 3b vorgesehen werden. Die Verstärkungselemente 8 können dabei unter der Oberfläche am ersten Gehäuseteil 3a und/oder am zweiten Gehäuseteil 3b eingesetzt werden, und zwar immer dort, wo das dünne federelastische Halteelement 7 durchgeführt wird. Erfindungsgemäß kann der Durchmesser des Verstärkungselementes 8 etwas größer ausgewählt sein als der Durchmesser der Aufnahme 9, um eine Presspassung zwischen dem Verstärkungselement 8 und der Aufnahme 9 herzustellen. Dadurch kann das Verstärkungselement 8 verlierfest im ersten Gehäuseteil 3a und/oder im zweiten Gehäuseteil 3b befestigt werden.

Die Erfindung beschränkt sich in ihrer Ausführung nicht auf die vorstehend angegebenen bevorzugten Ausführungsbeispiele der Erfindung. Vielmehr ist eine Vielzahl von Varianten denkbar, wie das Auslöseelement 5 und/oder der Mitnehmer 5a am Auslöseelement 5 ausgebildet sein können, um ein Mitziehen des Halteelementes 7 mit dem zweiten Gehäuseteil 3b zu ermöglichen.

### Bezugszeichenliste

- 1: Sperrvorrichtung
- 2: funktionswesentliches Bauteil, Lenkspindel
- 3a: erstes Gehäuseteil
- 3b: zweites Gehäuseteil
- 3c: separierbares Bauelement / elektrisches Schalterelement
- 4: Sperrbolzen
- 4a: Hubachse
- 4b: Sperrnuten
- 5: Auslöseelement
- 5a: Mitnehmer
- 5b: Stützabschnitt
- 5': Befestigungsabschnitt
- 5": Befestigungsabschnitt
- 6, 7: Sicherungseinheit
- 6: Arretierungselement
- 6a: Plättchen
- 6b: Druckfeder
- 6c: Befestigungsteil
- 7: Halteelement / Federelement / Federdrahtelement
- 7': erster Schenkel
- 7": zweiter Schenkel
- 7a: Biegestelle
- 7b: Biegestelle
- 8: Verstärkungselement
- 9: Aufnahme
- 10: Bohrung
- 11: Schließzylinder
- 12: Mitnehmerelement
- 12a: Feder für den Schließzylinder
- 13: Schieber
- 13a: Stift
- 13b: Druckfeder für den Schieber
- 13c: Druckfeder für den Stift

- α: Winkel unter Vorspannung
- α': Winkel ohne Vorspannung

- A: Eingriffsstellung der Sicherungseinheit
- B: Rückzugsstellung der Sicherungseinheit

- F: Rückstellkraft / Richtung der Rückfederung des Halteelementes
- K: Richtung zum Einführen eines Schlüssels in den Schließzylinder
- S: Schneidelinie
- T: Trennebene
- V: federelastische Vorspannung

- I: Sperrstellung des Bolzens
- II: Freigabestellung des Bolzens

## Patentansprüche

1. Sperrvorrichtung (1) zum Sperren eines funktionswesentlichen Bauteils (2) eines Kraftfahrzeuges, insbesondere zur Sperrung einer Lenkspindel (2), mit
einem ersten Gehäuseteil (3a), in dem ein Sperrbolzen (4) beweglich zwischen einer Sperrstellung (I) zur Sperrung des funktionswesentlichen Bauteils (2) und einer Freigabestellung (II) zur Freigabe des funktionswesentlichen Bauteils (2) aufgenommen ist,
und einem zweiten Gehäuseteil (3b), in dem Mittel (11, 12) zur Bewegung des Sperrbolzens (4) zwischen der Sperrstellung (I) und der Freigabestellung (II) aufgenommen sind,
wobei eine Sicherungseinheit (6, 7) am ersten Gehäuseteil (3a) vorgesehen ist, die in einer Eingriffsstellung (A) eine Bewegung des Sperrbolzens (4) verhindert, wenn das erste Gehäuseteil (3a) in seiner Anordnung zum zweiten Gehäuseteil (3b) verändert wird, und
in einer Rückzugsstellung (B) eine Bewegung des Sperrbolzens (4) freigibt, wenn das erste Gehäuseteil (3a) am zweiten Gehäuseteil (3b) angeordnet ist,
wobei ein Auslöseelement (5) vorgesehen ist, um bei Manipulationen des ersten Gehäuseteils (3a) und/oder des zweiten Gehäuseteils (3b) ein Überführen der Sicherungseinheit (6, 7) aus der Rückzugsstellung (B) in die Eingriffsstellung (A) zu unterstützen,
**dadurch gekennzeichnet,**
**dass** die Sicherungseinheit (6, 7) ein Arretierungselement (6) aufweist, welches in der Eingriffsstellung (A) der Sicherungseinheit (6, 7) mit dem Sperrbolzen (4) verrastbar ist und in der Rückzugsstellung (B) der Sicherungseinheit (6, 7) vom Sperrbolzen (4) beabstandet ist,
und **dass** die Sicherungseinheit (6, 7) ein Halteelement (7) aufweist, welches in der Rückzugsstellung (B) der Sicherungseinheit (6, 7) das Arretierungselement (6) beabstandet vom Sperrbolzen (4) hält und in der Eingriffsstellung (A) der Sicherungseinheit (6, 7) das Arretierungselement (6) zu einem mechanischen Eingriff mit dem Sperrbolzen (4) freigibt,
wobei das Halteelement (7) als ein Federelement (7) ausgebildet ist und eine federelastische Vorspannung aufweist, wenn das erste Gehäuseteil (3a) am zweiten Gehäuseteil (3b) angeordnet ist.

2. Sperrvorrichtung (1) nach Anspruch 1,
**dadurch gekennzeichnet,**
**dass** das Auslöseelement (5) aus einem Metall oder einer Metalllegierung ausgebildet, insbesondere aus einem Metallblech ausgeformt, ist.

3. Sperrvorrichtung (1) nach einem der vorgenannten Ansprüche,
**dadurch gekennzeichnet,**
**dass** das Auslöseelement (5) derart am zweiten Gehäuseteil (2) abgestützt, insbesondere befestigt, ist, dass das Auslöseelement (5) mit dem zweiten Gehäuseteil (2) bewegbar ist, wenn das erste Gehäuseteil (3a) in seiner Anordnung zum zweiten Gehäuseteil (3b) verändert wird,
wobei insbesondere das Auslöseelement (5) einen Stützabschnitt (5b) aufweist, der zum Abstützen des Auslöseelementes (5) am zweiten Gehäuseteil (2) dient.

4. Sperrvorrichtung (1) nach einem der vorgenannten Ansprüche,
**dadurch gekennzeichnet,**
**dass** das Auslöseelement (5) mindestens einen, vorzugsweise zwei, Befestigungsabschnitte (5', 5") aufweist, die zum Befestigen des Auslöseelementes (5) am zweiten Gehäuseteil (2) dienen.

5. Sperrvorrichtung (1) nach einem der vorgenannten Ansprüche,
**dadurch gekennzeichnet,**
**dass** das Auslöseelement (5), insbesondere an einem Befestigungsabschnitt (5', 5") des Auslöseelementes (5), einen Mitnehmer (5a) aufweist, der auf die Sicherungseinheit (6, 7) einwirkt, wenn das erste Gehäuseteil (3a) in seiner Anordnung zum zweiten Gehäuseteil (3b) verändert wird,
wobei insbesondere der Mitnehmer (5a) winkelförmig vom Auslöseelement (5), insbesondere von einem Befestigungsabschnitt (5', 5") des Auslöseelementes (5), absteht,
wobei bevorzugt der Mitnehmer (5a) rippenartig und/oder vorsprungartig am Auslöseelement (5), insbesondere an einem Befestigungsabschnitt (5', 5") des Auslöseelementes (5), ausgebildet ist.

6. Sperrvorrichtung (1) nach einem der vorgenannten Ansprüche,
**dadurch gekennzeichnet,**
**dass** das Auslöseelement (5), insbesondere der Mitnehmer (5a), gegenüber einer Biegestelle (7a, 7b) des Halteelementes (7) angeordnet ist, wenn das erste Gehäuseteil (3a) am zweiten Gehäuseteil (3b) angeordnet ist, und in die Biegestelle (7a, 7b) des Halteelementes (7) hineingreift, wenn das erste Gehäuseteil (3a) in seiner Anordnung zum zweiten Gehäuseteil (3b) verändert wird.

7. Sperrvorrichtung (1) nach einem der vorgenannten Ansprüche,
**dadurch gekennzeichnet,**
**dass** die federelastische Vorspannung im Halteelement (7) derart ausgebildet ist, dass das Halteelement (7) durch Rückfederung vom Arretierungselement (6) losgelöst wird, wenn das erste Gehäuseteil (3a) in seiner Anordnung zum zweiten Gehäuseteil (3b) verändert wird.

8. Sperrvorrichtung (1) nach einem der vorgenannten Ansprüche,
**dadurch gekennzeichnet,**
**dass** das Halteelement (7) als ein Drahtelement (7) ausgeführt ist, wobei das Drahtelement (7) vorzugsweise wenigstens eine Biegestelle (7a, 7b) aufweist, durch die das Drahtelement (7) in einen ersten Schenkel (7') und einen zweiten Schenkel (7") unterteilt ist.

9. Sperrvorrichtung (1) nach einem der vorgenannten Ansprüche,
**dadurch gekennzeichnet,**
**dass** das erste Gehäuseteil (3a) eine Bohrung (10) aufweist, in die zumindest ein erster Schenkel (7') des Halteelementes (7) wenigstens teilweise beweglich geführt aufgenommen ist und/oder
**dass** ein zweiter Schenkel (7") des Halteelementes (7) sich zwischen dem ersten Gehäuseteil (3a) und dem zweiten Gehäuseteil (3b) hinein erstreckt und/oder
**dass** ein erster Schenkel (7') und ein zweiter Schenkel (7") des Halteelementes (7) einen Winkel (α) zueinander einschließen, wobei der Winkel (α) unter der federelastischen Vorspannung im Halteelement (7) größer ist als bei Rückfederung des Halteelementes (7) und/oder
**dass** die federelastische Vorspannung durch ein Verspannen in das Halteelement (7) einbringbar ist, indem das erste Gehäuseteil (3a) am zweiten Gehäuseteil (3b) angeordnet wird, und der zweite Schenkel (7") zwischen dem ersten Gehäuseteil (3a) und dem zweiten Gehäuseteil (3b) unter Aufbringung der federelastischen Vorspannung eingeklemmt wird.

10. Sperrvorrichtung (1) nach einem der vorgenannten Ansprüche,
**dadurch gekennzeichnet,**
**dass** ein Verstärkungselement (8) am ersten Gehäuseteil (3a) und/oder am zweiten Gehäuseteil (3b) vorgesehen ist, um die Sicherungseinheit (6, 7) vor Manipulationen zu schützen,
wobei insbesondere das Verstärkungselement (8) als ein Bolzen (8) oder ein Drahtelement (8), vorzugsweise aus einem, bspw. gehärteten, Kugellagerstahl oder aus einem Sinterstahl, ausgeführt ist.

11. Sperrvorrichtung (1) nach einem der vorgenannten Ansprüche,
**dadurch gekennzeichnet,**
**dass** das erste Gehäuseteil (3a) und/oder das zweite Gehäuseteil (3b) eine Aufnahme (9) aufweist, in welcher das Verstärkungselement (8) aufgenommen ist,
wobei insbesondere das Verstärkungselement (8) und/oder die Aufnahme (9) derart ausgeformt sind, dass im eingebauten Zustand des Verstärkungselementes (8) eine Presspassung zwischen dem Verstärkungselement (8) und der Aufnahme (9) entsteht.

12. Sperrvorrichtung (1) nach einem der vorgenannten Ansprüche,
**dadurch gekennzeichnet,**
**dass** eine Vielzahl an Verstärkungselementen (8) am ersten Gehäuseteil (3a) und/oder am zweiten Gehäuseteil (3b) vorgesehen ist, um die Sicherungseinheit (6, 7) von unterschiedlichen Seiten oder um mehrere Sicherungseinheiten (6, 7) oder um mehrere Elemente der Sicherungseinheit (6, 7) vor Manipulationen zu schützen und/oder
**dass** am zweiten Gehäuseteil (3b) ein separierbares Bauelement (3c) angeordnet ist, wobei das separierbare Bauelement (3c) vorzugsweise ein elektrisches Schalterelement (3b) ist.

13. Sperrvorrichtung (1) nach einem der vorgenannten Ansprüche,
**dadurch gekennzeichnet,**
**dass** die Mittel (11, 12) zur Bewegung des Sperrbolzens (4) im zweiten Gehäuseteil (3b) einen Schließzylinder (11) umfassen, in den ein Schlüssel zur Drehung des Schließzylinders (11) einbringbar ist und/oder
**dass** die Mittel (11, 12) zur Bewegung des Sperrbolzens (4) im zweiten Gehäuseteil (3b) ein Mitnehmerelement (12) umfassen, das durch Drehung des Schließzylinders (11) beweglich ist und das mit dem Sperrbolzen (4) in Wirkverbindung steht, um den Sperrbolzen (4) bei Drehung des Schließzylinders (11) zwischen der Sperrstellung (I) und der Freigabestellung (II) entlang der Hubachse (4a) zu bewegen und/oder
**dass** der Sperrbolzen (4) wenigstens eine und vorzugsweise mehrere Sperrnuten (4a) aufweist, in die das Arretierungselement (6) in der Eingriffsstellung (A) zur Sperrung des Sperrbolzens (4) verrastbar ist, um eine Bewegung des Sperrbolzens (4) zu verhindern.

## Claims

1. Locking device (1) for locking a functionally essential component (2) of a motor vehicle, in particular for locking a steering shaft (2), with
a first housing part (3a) in which a locking bolt (4) is received movably between a locking position (I) for locking the functionally essential component (2) and a release position (II) for releasing the functionally essential component (2),
and a second housing part (3b) in which means (11, 12) for moving the locking bolt (4) between the locking position (I) and the release position (II) are received,
wherein a safety unit (6, 7) is provided on the first housing part (3a), which
in an engaged position (A) prevents movement of the locking bolt (4) when the first housing part (3a) is changed in its arrangement relative to the second housing part (3b), and
in a retracted position (B) releases a movement of the locking bolt (4) when the first housing part (3a) is arranged on the second housing part (3b),
wherein a release element (5) is provided in order to support a transfer of the safety unit (6, 7) from the retracted position (B) into the engaged position (A) in the event of manipulations of the first housing part (3a) and/or the second housing part (3b),
**characterized in that**
the safety unit (6, 7) comprises a locking element (6) which can be latched to the locking bolt (4) in the engaged position (A) of the safety unit (6, 7) and which is spaced apart from the locking bolt (4) in the retracted position (B) of the safety unit (6, 7),
and **in that** the safety unit (6, 7) comprises a holding element (7) which, in the retracted position (B) of the safety unit (6, 7), holds the locking element (6) at a distance from the locking bolt (4) and, in the engaged position (A) of the safety unit (6, 7), releases the locking element (6) for mechanical engagement with the locking bolt (4),
wherein the holding element (7) is designed as a spring element (7) and comprises a spring-elastic pretension when the first housing part (3a) is arranged on the second housing part (3b).

2. Locking device (1) according to claim 1,
**characterized in that**
the release element (5) is formed from a metal or a metal alloy, in particular from a metal sheet.

3. Locking device (1) according to one of the preceding claims,
**characterized in that**
the release element (5) is supported, in particular fastened, on the second housing part (2) in such a way that the release element (5) can be moved with the second housing part (2) when the first housing part (3a) is changed in its arrangement relative to the second housing part (3b),
wherein in particular the release element (5) comprises a support section (5b) which serves to support the release element (5) on the second housing part (2).

4. Locking device (1) according to one of the preceding claims,
**characterized in that**
the release element (5) comprises at least one, preferably two, fastening sections (5', 5") which serve to fasten the release element (5) on the second housing part (2).

5. Locking device (1) according to one of the preceding claims,
**characterized in that**
the release element (5) comprises a carrier, in particular on a fastening section (5', 5") of the release element (5), which acts on the safety unit (6, 7) when the first housing part (3a) is changed in its arrangement relative to the second housing part (3b),
wherein in particular the carrier (5a) projects at an angle from the release element (5), in particular from a fastening section (5', 5") of the release element (5),
wherein preferably the carrier (5a) is formed rib-like and/or projection-like on the release element (5), in particular on a fastening section (5', 5") of the release element (5).

6. Locking device (1) according to one of the preceding claims,
**characterized in that**
the release element (5), in particular the carrier (5a), is arranged opposite a bending point (7a, 7b) of the holding element (7) when the first housing part (3a) is arranged on the second housing part (3b), and engages in the bending point (7a, 7b) of the holding element (7) when the first housing part (3a) is changed in its arrangement relative to the second housing part (3b).

7. Locking device (1) according to one of the preceding claims,
**characterized in that**
the spring-elastic pretension in the holding element (7) is formed in such a way that the holding element (7) is released from the locking element (6) by springing back, when the first housing part (3a) is changed in its arrangement relative to the second housing part (3b).

8. Locking device (1) according to one of the preceding claims,
**characterized in that**
the holding element (7) is designed as a wire element (7), wherein the wire element (7) preferably comprises at least one bending point (7a, 7b) by means of which the wire element (7) is divided into a first leg (7') and a second leg (7").

9. Locking device (1) according to one of the preceding claims,
**characterized in that**
the first housing part (3a) comprises a bore (10), in which at least a first leg (7') of the holding element (7) is received in an at least partially movably guided manner and/or
a second leg (7") of the holding element (7) extends between the first housing part (3a) and the second housing part (3b) and/or
a first leg (7') and a second leg (7") of the holding element (7) enclose an angle (α), wherein the angle (α) is larger under the spring-elastic pretension in the holding element (7) than when the holding element (7) springs back and/or
the spring-elastic pretension can be introduced into the holding element (7) by tensioning, when the first housing part (3a) is arranged on the second housing part (3b), and the second leg (7") is clamped between the first housing part (3a) and the second housing part (3b) while the spring-elastic pretension is applied.

10. Locking device (1) according to one of the preceding claims,
**characterized in that**
a reinforcing element (8) is provided on the first housing part (3a) and/or on the second housing part (3b) in order to protect the safety unit (6, 7) against manipulation,
wherein in particular the reinforcing element (8) is designed as a bolt (8) or a wire element (8), preferably made of a ball bearing steel, e.g. hardened, or of a sintered steel.

11. Locking device (1) according to one of the preceding claims,
**characterized in that**
the first housing part (3a) and/or the second housing part (3b) comprises a slot (9) in which the reinforcing element (8) is received,
wherein in particular the reinforcing element (8) and/or the slot (9) are formed in such a way that in the installed state of the reinforcing element (8) an interference fit is produced between the reinforcing element (8) and the slot (9).

12. Locking device (1) according to one of the preceding claims,
**characterized in that**
a plurality of reinforcing elements (8) is provided on the first housing part (3a) and/or on the second housing part (3b) in order to protect the safety unit (6, 7) from different sides or several safety units (6, 7) or several elements of the safety unit (6, 7) from manipulation and/or
a separable component (3c) is arranged on the second housing part (3b), the separable component (3c) preferably being an electrical switch element (3b).

13. Locking device (1) according to one of the preceding claims,
**characterized in that**
the means (11, 12) for moving the locking bolt (4) in the second housing part (3b) comprise a lock cylinder (11) into which a key can be inserted for rotating the lock cylinder (11) and/or the means (11, 12) for moving the locking bolt (4) in the second housing part (3b) comprise a carrier element (12) which can be moved by rotation of the locking cylinder (11) and which is operatively connected to the locking bolt (4) in order to move the locking bolt (4) along the stroke axis (4a) when the locking cylinder (11) is rotated between the locking position (I) and the release position (II) and/or
the locking bolt (4) comprises at least one and preferably a plurality of locking grooves (4a) into which the locking element (6) can be latched in the engaged position (A) for locking the locking bolt (4) in order to prevent movement of the locking bolt (4).

## Revendications

1. Dispositif de verrouillage (1) pour verrouiller un composant fonctionnellement essentiel (2) d'un véhicule automobile, en particulier pour verrouiller un arbre de direction (2), avec
une première partie du boîtier (3a) dans laquelle un boulon de verrouillage (4) est logé de manière mobile entre une position de verrouillage (I) pour verrouiller le composant fonctionnellement essentiel (2) et une position de libération (II) pour libérer le composant fonctionnellement essentiel (2),
et une deuxième partie du boîtier (3b) dans laquelle des moyens (11, 12) sont logés pour déplacer le boulon de verrouillage (4) entre la position de verrouillage (I) et la position de libération (II),
dans lequel une unité de sécurité (6, 7) est prévue sur la première partie de boîtier (3a), qui empêche le mouvement du boulon de verrouillage (4) dans une position engagée (A) lorsque la première partie du boîtier (3a) est modifiée dans sa disposition par rapport à la deuxième partie du boîtier (3b), et
dans une position rétractée (B) libère un mouvement du boulon de verrouillage (4) lorsque la première partie du boîtier (3a) est disposée sur la deuxième partie du boîtier (3b),
dans lequel un élément de déclenchement (5) est prévu pour permettre le transfert de l'unité de sécurité (6, 7) de la position rétractée (B) à la position engagée (A) en cas de manipulation de la première partie du boîtier (3a) et/ou de la deuxième partie du boîtier (3b),
**caractérisé en ce que**
l'unité de sécurité (6, 7) comporte un élément d'arrêt (6) qui peut être verrouillé sur le boulon de verrouillage (4) dans la position engagée (A) de l'unité de sécurité (6, 7) et qui est espacé du boulon de verrouillage (4) dans la position rétractée (B) de l'unité de sécurité (6, 7),
et **en ce que** l'unité de sécurité (6, 7) présente un élément de support (7) qui, dans la position rétractée (B) de l'unité de sécurité (6, 7), maintient l'élément d'arrêt (6) à distance du boulon de verrouillage (4) et, dans la position engagée (A) de l'unité de sécurité (6, 7), libère l'élément d'arrêt (6) pour l'engagement mécanique avec le boulon de verrouillage (4), dans lequel l'élément de support (7) est conçu comme un élément de ressort (7) et présente une précontrainte élastique lorsque la première partie du boîtier (3a) est disposée sur la deuxième partie du boîtier (3b).

2. Dispositif de verrouillage (1) selon la revendication 1,
**caractérisé en ce que**
l'élément de déclenchement (5) est constitué d'un métal ou d'un alliage métallique, en particulier d'une tôle métallique.

3. Dispositif de verrouillage (1) selon l'une des revendications précédentes,
**caractérisé en ce que**
l'élément de déclenchement (5) est appuyé, en particulier fixé, sur la deuxième partie du boîtier (2) de telle sorte que l'élément de déclenchement (5) peut être déplacé avec la deuxième partie du boîtier (2) lorsque la première partie du boîtier (3a) est modifiée dans sa disposition par rapport à la deuxième partie du boîtier (3b),
dans lequel l'élément de déclenchement (5), en particulier, présente une section de support (5b) qui sert à soutenir l'élément de déclenchement (5) sur la deuxième partie du boîtier (2).

4. Dispositif de verrouillage (1) selon l'une des revendications précédentes,
**caractérisé en ce que**
l'élément de déclenchement (5) comporte au moins une, de préférence deux, sections de fixation (5', 5") qui servent à fixer l'élément de déclenchement (5) à la deuxième partie du boîtier (2).

5. Dispositif de verrouillage (1) selon l'une des revendications précédentes,
**caractérisé en ce que**
l'élément de déclenchement (5), en particulier sur une section de fixation (5', 5") de l'élément de déclenchement (5), comporte un entraîneur (5a) qui agit sur l'unité de sécurité (6, 7) lorsque la première partie du boîtier (3a) est modifiée dans sa disposition par rapport à la deuxième partie du boîtier (3b),
dans lequel en particulier l'entraîneur (5a) fait saillie sous un angle par rapport à l'élément de déclenchement (5), en particulier par rapport à une section de fixation (5', 5") de l'élément de déclenchement (5),
dans lequel de préférence l'entraîneur (5a) est formé en forme de nervure et/ou de saillie sur l'élément de déclenchement (5), en particulier sur une section de fixation (5', 5") de l'élément de déclenchement (5).

6. Dispositif de verrouillage (1) selon l'une des revendications précédentes,
**caractérisé en ce que**
l'élément de déclenchement (5), en particulier l'entraîneur (5a), est disposé en face d'un point de flexion (7a, 7b) de l'élément de support (7) lorsque la première partie du boîtier (3a) est disposée sur la deuxième partie du boîtier (3b), et s'engage dans le point de flexion (7a, 7b) de l'élément de support (7) lorsque la première partie du boîtier (3a) est modifiée dans sa disposition par rapport à la deuxième partie du boîtier (3b).

7. Dispositif de verrouillage (1) selon l'une des revendications précédentes,
**caractérisé en ce que**
la précontrainte élastique dans l'élément de support (7) est formée de telle manière que l'élément de support (7) est libéré de l'élément d'arrêt (6) par retour élastique lorsque la première partie du boîtier (3a) est modifiée dans sa disposition par rapport à la deuxième partie du boîtier (3b).

8. Dispositif de verrouillage (1) selon l'une des revendications précédentes,
**caractérisé en ce que**
l'élément de support (7) est conçu comme un élément en fil (7), l'élément en fil (7) présentant de préférence au moins un point de flexion (7a, 7b) au moyen duquel l'élément en fil (7) est divisé en une première branche (7') et une deuxième branche (7").

9. Dispositif de verrouillage (1) selon l'une des revendications précédentes,
**caractérisé en ce que**
la première partie du boîtier (3a) présente un alésage (10) dans lequel au moins une première branche (7') de l'élément de support (7) est reçue de manière au moins partiellement guidée de manière mobile et/ou
**en ce qu'**une deuxième branche (7") de l'élément de support (7) s'étend entre la première partie du boîtier (3a) et la deuxième partie du boîtier (3b) et/ou
**en ce qu'**une première branche (7') et une deuxième branche (7") de l'élément de support (7) forment entre elles un angle (α), l'angle (α) étant plus grand sous la précontrainte élastique de l'élément de support (7) que lorsque l'élément de support (7) revient à sa position initiale et/ou
**en ce que** la précontrainte élastique peut être introduite dans l'élément de support (7) en le tendant, **en ce que** la première partie du boîtier (3a) est disposée sur la deuxième partie du boîtier (3b), et la deuxième branche (7") est serrée entre la première partie du boîtier (3a) et la deuxième partie du boîtier (3b) pendant que la précontrainte élastique est appliquée.

10. Dispositif de verrouillage (1) selon l'une des revendications précédentes,
**caractérisé en ce qu'**
un élément de renforcement (8) est prévu sur la première partie du boîtier (3a) et/ou sur la deuxième partie du boîtier (3b) afin de protéger l'unité de sécurité (6, 7) contre toute manipulation,
dans lequel en particulier l'élément de renforcement (8) est conçu comme un boulon (8) ou un élément en fil (8), de préférence en acier pour roulement à billes, par exemple trempé, ou en acier fritté.

11. Dispositif de verrouillage (1) selon l'une des revendications précédentes,
**caractérisé en ce que**
la première partie du boîtier (3a) et/ou la deuxième partie du boîtier (3b) comporte un réceptacle (9) dans lequel est logé l'élément de renforcement (8),
l'élément de renforcement (8) et/ou le réceptacle (9) étant en particulier conçus de telle sorte qu'à l'état monté de l'élément de renforcement (8), un ajustement serré est produit entre l'élément de renforcement (8) et le réceptacle (9).

12. Dispositif de verrouillage (1) selon l'une des revendications précédentes,
**caractérisé en ce qu'**
une multiplicité d'éléments de renforcement (8) sont prévus sur la première partie du boîtier (3a) et/ou sur la deuxième partie du boîtier (3b) afin de protéger l'unité de sécurité (6, 7) de différents côtés ou de protéger plusieurs unités de sécurité (6, 7) ou plusieurs éléments de l'unité de sécurité (6, 7) contre toute manipulation et/ou
**en ce qu'**un composant séparable (3c) est disposé sur la deuxième partie du boîtier (3b), le composant séparable (3c) étant de préférence un élément de commutation électrique (3b).

13. Dispositif de verrouillage (1) selon l'une des revendications précédentes,
**caractérisé en ce que**
les moyens (11, 12) pour déplacer le boulon de verrouillage (4) dans la deuxième partie du boîtier (3b) comprennent un cylindre de fermeture (11) dans lequel une clé peut être insérée pour faire tourner le cylindre de fermeture (11) et/ou
**en ce que** les moyens (11, 12) pour déplacer le boulon de verrouillage (4) dans la deuxième partie du boîtier (3b) comprennent un élément d'entraînement (12) qui peut être déplacé par la rotation du cylindre de fermeture (11) et qui est en liaison active avec le boulon de verrouillage (4) afin de déplacer le boulon de verrouillage (4) le long de l'axe de course (4a) lorsque le cylindre de fermeture (11) est tourné entre la position de verrouillage (I) et la position de libération (II) et/ou
**en ce que** le boulon de verrouillage (4) présente au moins une et de préférence plusieurs rainures de verrouillage (4a) dans lesquelles l'élément d'arrêt (6) peut être verrouillé dans la position engagée (A) pour le verrouillage du boulon de verrouillage (4) afin d'empêcher le mouvement du boulon de verrouillage (4).
